(19) Europäisches Patentamt
European Patent Office
Office européen des brevets

(11) **EP 4 648 364 A1**

(12) **EUROPEAN PATENT APPLICATION**
published in accordance with Art. 153(4) EPC

(43) Date of publication:
**12.11.2025 Bulletin 2025/46**

(21) Application number: **23913914.0**

(22) Date of filing: **03.01.2023**

(51) International Patent Classification (IPC):
***H04L 27/00*** (2006.01)

(52) Cooperative Patent Classification (CPC):
**H04L 27/00**

(86) International application number:
**PCT/CN2023/070141**

(87) International publication number:
**WO 2024/145752 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Beijing Xiaomi Mobile Software Co.,
Ltd.
Beijing 100085 (CN)**

(72) Inventor: **ZHANG, Zhenyu
Beijing 100085 (CN)**

(74) Representative: **Stöckeler, Ferdinand et al
Schoppe, Zimmermann, Stöckeler
Zinkler, Schenk & Partner mbB
Patentanwälte
Radlkoferstrasse 2
81373 München (DE)**

(54) **UPLINK EIGHT-ANTENNA PORT CODEBOOK DETERMINATION METHOD AND DEVICE**

(57)    The present application relates to the technical field of communications, and provides an uplink eight-antenna port codebook determination method and device. The method comprises: determining a candidate codeword set, the candidate codeword set comprising at least one two-antenna port codeword and/or at least one four-antenna port codeword; and according to at least one candidate codeword in the candidate codeword set, determining a first codeword matching the number of transmission layers of an uplink channel, the first code- word being a codeword in partially coherent transmission. A codeword in partially coherent transmission of high-dimensional uplink eight antenna ports can be constructed on the basis of a low-dimensional codeword, so that the uplink channel communication supports the partially coherent transmission of four port groups of the eight antenna ports, the uplink channel communication technology is further enhanced, the uplink channel transmission rate is effectively increased, and the communication efficiency is improved.

Determining a candidate codeword set, in which the candidate codeword set includes at least one 2-antenna port codeword and/or at least one 4-antenna port codeword — 201

Determining a first codeword matching the number of transmission layers of an uplink channel according to at least one candidate codeword in the candidate codeword set, in which the first codeword is a codeword for partially-coherent transmission — 202

FIG. 2

EP 4 648 364 A1

## Description

### TECHNICAL FIELD

The present disclosure relates to the field of communication technology, and specifically to a method and apparatus for determining a codebook for uplink 8 antenna ports.

### BACKGROUND

In a 5G (5th Generation Mobile Communication Technology) NR (New Radio) system, a codebook-based uplink channel communication method is a spatial multiplexing communication method for determining precoding of uplink channels based on a fixed codebook, which is a commonly used communication method.

At present, in order to support a higher uplink transmission rate comparable to the downlink, it is possible to consider expanding the number of 4 of uplink transmit antenna ports, while supporting transmission of more than 4 layers. Therefore, when the number of uplink transmit antenna ports is expanded to 8, it is necessary to determine a codebook for uplink 8 antenna ports that matches the number of antenna ports to meet communication requirements.

### SUMMARY

Embodiments of a first aspect of the present disclosure provides a method for determining a codebook for uplink 8 antenna ports, including: determining a candidate codeword set, in which the candidate codeword set comprises at least one 2-antenna port codeword and/or at least one 4-antenna port codeword; and determining a first codeword matching the number of transmission layers of an uplink channel according to at least one candidate codeword in the candidate codeword set, in which the first codeword is a codeword for partially-coherent transmission.

Embodiments of a second aspect of the present disclosure provides an apparatus for determining a codebook for uplink 8 antenna ports, including a processing unit, configured to determine a candidate codeword set, in which the candidate codeword set comprises at least one 2-antenna port codeword and/or at least one 4-antenna port codeword; and determine a first codeword matching the number of transmission layers of an uplink channel according to at least one candidate codeword in the candidate codeword set, in which the first codeword is a codeword for partially-coherent transmission.

Embodiments of a third aspect of the present disclosure provides a communication apparatus, including a processor and a memory for storing computer programs. The processor is configured to execute the computer programs stored in the memory, to cause the communication apparatus to perform the method of the embodiments of the first aspect.

Embodiments of a fourth aspect of the present disclosure provides a communication apparatus, including a processor and an interface circuit for receiving code instructions and transmitting the code instructions to the processor. The processor is configured to execute the code instructions, to perform the method of the embodiments of the first aspect.

Embodiments of a fifth aspect of the present disclosure provides a computer-readable storage medium for storing instructions. When the instructions are executed, the method of the embodiments of the first aspect is implemented.

Embodiments of a sixth aspect of the present disclosure provides a computer program. When the computer program is executed on a computer, the computer is caused to perform the method of the embodiments of the first aspect.

With the method and apparatus for determining a codebook for uplink 8 antenna ports provided by the embodiments of the present disclosure, by determining a candidate codeword set including at least one 2-antenna port codeword and/or at least one 4-antenna port codeword, and determining a first codeword that matches the number of transmission layers of an uplink channel according to at least one candidate codeword in the candidate codeword set, in which the first codeword is a codeword for partially-coherent transmission, a high-dimensional partially-coherent transmission codeword of uplink 8 antenna ports may be constructed based on a low-dimensional codeword, so that the uplink channel communication supports partially-coherent transmission of 4-port groups of 8 antenna ports, thereby further enhancing the uplink channel communication technology, effectively improving the uplink channel transmission rate, and thus improving the communication efficiency.

Additional aspects and advantages of the present disclosure will be given in part in the description below, and in part will become apparent from the description below, or will be learned through the practice of the present disclosure.

### BRIEF DESCRIPTION OF THE DRAWINGS

The above and/or additional aspects and advantages of the present disclosure will become apparent and easily understood from the following description of the embodiments in conjunction with the accompanying drawings, in which:

FIG. 1 is a schematic diagram of a communication system according to an embodiment of the present disclosure;

FIG. 2 is a flowchart of a method for determining a codebook for uplink 8 antenna ports according to an embodiment of the present disclosure;

FIG. 3a is a schematic diagram showing an antenna arrangement of a terminal according to an embodiment of the present disclosure;

FIG. 3b is a schematic diagram showing an antenna arrangement of a terminal according to an embodiment of the present disclosure;

FIG. 4 is a flowchart of a method for determining a codebook for uplink 8 antenna ports according to an embodiment of the present disclosure;

FIG. 5 is a flowchart of a method for determining a codebook for uplink 8 antenna ports according to an embodiment of the present disclosure;

FIG. 6 is a flowchart of a method for determining a codebook for uplink 8 antenna ports according to an embodiment of the present disclosure;

FIG. 7 is a flowchart of an uplink channel communication method based on a codebook for uplink 8 antenna ports according to an embodiment of the present disclosure;

FIG. 8 is a flowchart of an uplink channel communication method based on a codebook for uplink 8 antenna ports according to an embodiment of the present disclosure;

FIG. 9 is a block diagram of an apparatus for determining a codebook for uplink 8 antenna ports according to an embodiment of the present disclosure;

FIG. 10 is a block diagram of a communication apparatus according to an embodiment of the present disclosure; and

FIG. 11 is a block diagram of a chip according to an embodiment of the present disclosure.

## DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of apparatuses and methods consistent with aspects related to the present disclosure as recited in the appended claims.

The terms used in the embodiments of the present disclosure are solely for the purpose of describing a particular embodiment and are not intended to limit the embodiments of the present disclosure. The terms "a" and "the" in the singular form used in the embodiments and claims of the disclosure are also intended to include the plural form, unless the context clearly indicates other meaning. It should also be understood that the term "and/or" as used herein refers to any or all possible combinations of one or more associated listed items.

It should be understood that although the terms first, second, third, etc. may be used to describe various information in the embodiments of the present disclosure, such information should not be limited to these terms. These terms are used only to distinguish information in the same type from one another. For example, without leaving the scope of the embodiments of the present disclosure, the first message may also be referred to as the second information, and likewise the second information may be referred to as the first message. Depending on the context, the words "if" and "in a case" used here may be interpreted as "when" or "in response to determining".

The embodiments of the present disclosure are described in detail below, and examples of the embodiments are shown in the accompanying drawings, throughout which the same or similar reference numerals represent the same or similar elements. The embodiments described below with reference to the accompanying drawings are exemplary and are intended to be used to explain the present disclosure, and should not be construed as limiting the present disclosure.

In order to better understand the method for determining a codebook for uplink 8 antenna ports disclosed in the embodiments of the present disclosure, a communication system to which the embodiments of the present disclosure are applicable is described below.

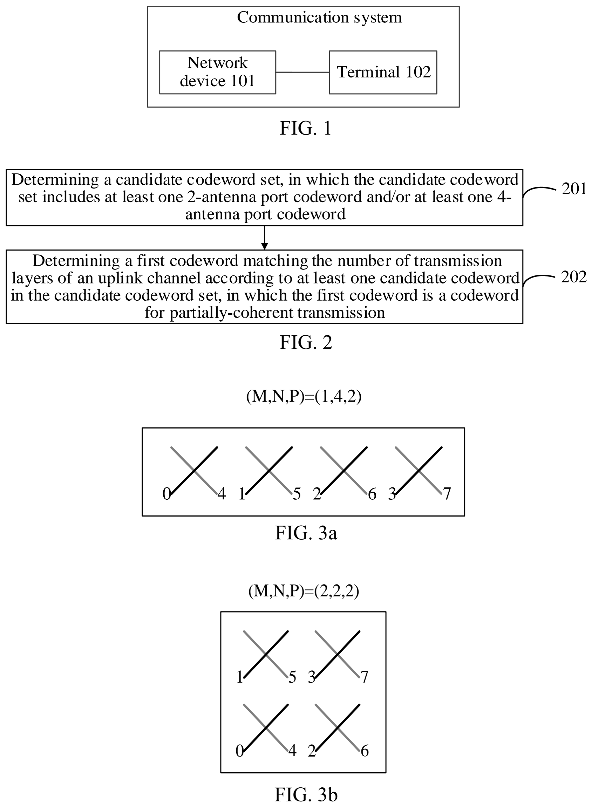

Please refer to FIG. 1, which is a schematic diagram of a communication system according to an embodiment of the present disclosure. As illustrated in FIG. 1, the communication system may include, but is not limited to, one network device and one terminal. The number and form of devices shown in FIG. 1 are only used as examples and do not constitute a limitation on the embodiments of the present disclosure. In actual applications, two or more network devices and two or more terminals may be included. The communication system shown in FIG. 1 includes one network device 101 and one terminal 102 as an example.

It should be noted that the technical solution of the embodiments of the present disclosure may be applied to various communication systems, for example, a long term evolution (LTE) system, a 5th generation (5G) mobile communication system, a 5G new radio (NR) system, or other new mobile communication systems in the future.

It should be understood that the communication system in the embodiments of the present disclosure is to more clearly illustrate the technical solution of the embodiments of the present disclosure, and does not constitute a limitation on the technical solution in the embodiments of the present disclosure. Those skilled in the art may know, with the evolution of the system architecture and the emergence of new service scenarios, the technical solution in the embodiments of the present disclosure is also applicable to similar technical problems.

The network device 101 in the embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access point in a wireless fidelity (WiFi) system. The embodiments of the present disclosure do not limit the specific technology and the specific device form used by the network device. The network device in the embodiments of the present disclosure may include a central unit (CU) and a distributed unit (DU), in which the CU may also be called a control unit. A protocol layer of the network device, for example, a base station, may be divided by adopting the CU-DU structure. Some functions of the protocol layer are centrally controlled by the CU, and some or all of remaining functions of the protocol layer are distributed in the DU, which is centrally controlled by the CU.

The terminal 102 in the embodiments of the present disclosure is an entity on the user side for receiving or sending signals, such as a mobile phone. Terminal may also be called, a terminal device, a user equipment (UE), a mobile station (MS), a mobile terminal (MT), etc. Terminal may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The embodiments of the present disclosure do not limit the specific technology and the specific device form used by the terminal.

In a 5G (5th Generation Mobile Communication Technology) NR (New Radio) system, a codebook-based uplink channel communication method is a communication method for determining precoded spatial multiplexing of uplink channels based on a fixed codebook, which is a commonly used communication method.

In codebook-based physical uplink shared channel (PUSCH) transmission in the NR, the terminal needs to be configured with a sounding reference signal (SRS) resource set for codebook-based uplink transmission. The SRS resource set may be configured with multiple ($N_{SRS}$) SRS resources. The network side will feedback an SRS resource index (SRI) of log2($N_{SRS}$) bits. The SRS resource may be selected through indication of the SRI. Similarly, the network device determines a precoding matrix and the number of transmission layers used for an actual transmission of the terminal based on measurement of uplink channel state information (CSI) and notifies the terminal. The network may notify the terminal of the precoding matrix and the number of transmission layers used for the actual transmission through a transmission precoding matrix indicator (TPMI). Data of the terminal in the subsequent uplink transmission needs to be precoded using the precoding matrix specified by the network device, and the precoded data is mapped to a corresponding antenna port according to a spatial filter corresponding to the SRS resource indicated by the SRI. Different SRSs will be transmitted using different spatial filters, so the precoded data of the terminal needs to be filtered by the spatial filter used by the SRS indicated by the SRI. In this way, transmission of uplink data from single layer to full rank can be supported.

At present, the maximum number of antenna ports supported in a 5G NR uplink MIMO (Multiple Input Multiple Output) system is 4, and only dual-polarized antennas are supported, so there is only one antenna arrangement, whose dimension is (M, N, P) = (1, 2, 2), that is, a dual-polarized antenna pair of one row and two columns. The communication system defines three types of coherent transmission for UEs, namely, fully-coherent transmission for all antennas, partially-coherent transmission for some antennas, and non-coherent transmission for antennas. Therefore, a codebook design for uplink transmission needs to support corresponding three types of codewords, namely, a fully-coherent transmission codeword for all antennas, a partially-coherent transmission codeword for some antennas, and a non-coherent transmission codeword for antennas. In the Rel-15 protocol, the uplink supports up to 4 ports and up to 4 layers of transmission, thus the maximum dimension of the corresponding codebook matrix is 4*4.

In order to support a higher uplink transmission rate comparable to the downlink, it is possible to consider expanding the maximum number of antenna ports supported per UE in the MIMO uplink transmission from 4 (for example, to 8). For the partially-coherent transmission, the supported number of antenna port groups is 2 or 4, that is, 8 antenna ports may be divided into 2 or 4 antenna port groups for coherent transmission. It is required to design a codebook for uplink 8 antenna ports to meet requirements of partially-coherent transmission of 4-port group.

In view of the above problems, the present disclosure proposes a method and apparatus for determining a codebook for uplink 8 antenna ports.

The method and apparatus for determining a codebook for uplink 8 antenna ports provided by the present disclosure will be described in detail below with reference to the accompanying drawings.

FIG. 2 is a flowchart of a method for determining a codebook for uplink 8 antenna ports according to an embodiment of the present disclosure. The method for determining a codebook for uplink 8 antenna ports may be executed alone, or in combination with any embodiment of the present disclosure or a possible implementation in the embodiments, or in combination with any technical solution in the related art.

As illustrated in FIG. 2, the method for determining a codebook for uplink 8 antenna ports includes the following steps.

At step 201, a candidate codeword set is determined, in which the candidate codeword set includes at least one 2-antenna port codeword and/or at least one 4-antenna port codeword.

In an embodiment of the present disclosure, the candidate codeword set may be determined. The candidate codeword set includes at least one 2-antenna port (2Tx) codeword and/or at least one 4-antenna port (4Tx) codeword. A first codeword of uplink 8 antenna ports (8Tx) may be determined based on the at least one candidate codeword.

It should be noted that the 8 uplink antenna ports in the embodiments of the present disclosure refer to the number of antenna ports for the terminal to send the uplink channel, and the number of antenna ports for the uplink channel is 8.

In an embodiment of the present disclosure, the number of antenna ports for the terminal to send the uplink channel is 8, and the 8 antenna ports include two polarization directions. That is, in this embodiment of the present disclosure, an arrangement of the 8 antenna ports is a dual-polarized antenna arrangement.

Optionally, the two polarization directions may be vertical polarization and horizontal polarization, or may be two mutually orthogonal directions that have certain angles (such as +45° and -45°) with respect to the horizontal plane and the vertical plane, respectively.

Dual-polarized antenna means that one antenna may be used for receiving and transmitting, and the one antenna has two polarization modes, i.e., vertical polarization mode and horizontal polarization mode, or has two tilted polarization modes (also called cross polarization). It should be noted that antennas may be classified into single-polarized antennas and dual-polarized antennas according to the polarization mode. Single polarization and dual polarization are both linear polarization modes. Linear polarization usually has two types: the horizontal polarization and the vertical polarization, and can also have the tilted polarization.

As an example, the dual-polarized antenna arrangement of a single-plane antenna array may be shown in FIG. 3a or FIG. 3b. The arrangement shown in FIG. 3a has a dimension (M, N, P) = (1, 4, 2), that is, the number of antenna ports in a first dimension of the single-plane antenna array in the same polarization direction is 1 (M = 1), the number of antenna ports in a second dimension of the same polarization direction is 4 (N = 4), and the number of polarization directions of the multiple antenna ports is 2 (P = 2). The arrangement shown in FIG. 3b has a dimension (M, N, P) = (2, 2, 2), that is, the number of antenna ports in a first dimension of the single-plane antenna array in the same polarization direction is 2 (M = 2), the number of antenna ports in a second dimension of the same polarization direction is 2 (N = 2), and the number of polarization directions of the multiple antenna ports is 2 (P = 2).

It is understandable that numbering rules of the antenna ports in FIG. 3a and FIG. 3b are only given as possible examples, and other possible numbering rules of the antenna ports may also be adopted, which are not limited in the embodiments of the present disclosure. When performing uplink channel transmission, other numbering rules of the antenna ports may be adopted as long as a corresponding layer is transmitted at a corresponding antenna port, that is, only a mapping relationship between layers and antenna ports is affected in the form of codeword matrix. In addition, in a frequency range FR1, one antenna port corresponds to one physical antenna, and in a frequency range FR2, one antenna port corresponds to multiple physical antennas.

In the embodiments of the present disclosure, there is no limitation on a method for determining the 4Tx candidate codeword and the 2Tx candidate codeword, and the method may be determined according to an actual situation. For example, the at least one 4Tx candidate codeword may be determined based on an uplink transmission 4Tx codebook agreed in the 3GPP communication protocol; or the at least one 4Tx candidate codeword may be determined based on a downlink transmission 4Tx codebook agreed in the 3GPP communication protocol. Similarly, the at least one 2Tx candidate codeword may be determined based on an uplink transmission 2Tx codebook agreed in the 3GPP communication protocol; or the at least one 2Tx candidate codeword may be determined based on a downlink transmission 2Tx codebook agreed in the 3GPP communication protocol.

In some implementations, the candidate codeword set may include at least one 2Tx codeword.

In some implementations, the candidate codeword set may include at least one 4Tx codeword.

In some implementations, the candidate codeword set may include at least one 2Tx codeword and at least one 4Tx codeword.

It should be understood that the codeword in each embodiment of the present disclosure may refer to a precoding matrix, and the codebook may be a collection of one or more codewords/precoding matrices.

At step 202, a first codeword matching the number of transmission layers of an uplink channel is determined according to at least one candidate codeword in the candidate codeword set, in which the first codeword is a codeword for partially-coherent transmission.

In an embodiment of the present disclosure, the first codeword matching the number of transmission layers of the uplink channel may be determined according to at least one candidate codeword in the candidate codeword set.

In an embodiment of the present disclosure, the number of channel transmission layers of the uplink 8 antenna ports may be 1 to 8.

It should be understood that the terminal may not calibrate all antenna ports to enable coherent transmission. The NR system defines three types of antenna coherent transmission capabilities for terminals: fully-coherent: all antenna ports of the terminal may perform coherent transmission; partially-coherent: antenna ports in the same coherent transmission group of the terminal may perform coherent transmission, but antenna ports in different coherent transmission groups cannot perform coherent transmission; non-coherent: no antenna port of the terminal may perform coherent transmission.

In an embodiment of the present disclosure, the determined first codeword may be a codeword for partially-coherent transmission.

Since the partially-coherent transmission only makes transmission layers corresponding to some antenna ports orthogonal to each other, all antenna ports need to be grouped so that the data transmitted in some layers is mapped only to one antenna port group. 8 antenna ports may be divided into multiple antenna port groups, and each group only corresponds to some antenna ports, and the layers corresponding to the antenna ports in the group are orthogonal to each other.

For example, 8 antenna ports are divided into 4 groups, each group has 2 antenna ports, corresponding to 2 uplink transmission layers; in this case, the 2 uplink transmission layers in each group need to be orthogonal to each other, and there is no need to require the uplink transmission layers of different groups to be orthogonal to each other. In other words, the data transmitted by some layers is only mapped to one antenna port group, and the data transmitted by other layers is only mapped to another antenna port group, and each part of transmission layers corresponds to each antenna port group one by one.

In some implementations, a grouping rule of antenna ports for coherent transmission among the 8 antenna ports may be determined, and the number of groups of the antenna ports for coherent transmission is 4. 2 antenna ports in each group may perform coherent transmission.

Optionally, with the numbering rules of the antenna ports in FIG. 3a and FIG. 3b, the grouping rule may be: the ports included in port group 1 are {0,4}, the ports included in port group 2 are {1,5}, the ports included in port group 3 are {2,6}, and the ports included in port group 4 are {3,7}; or

the grouping rule may be: the ports included in port group 1 are {0,1}, the ports included in port group 2 are {2,3}, the ports included in port group 3 are {4,5}, and the ports included in port group 4 are {6,7}; or

the grouping rule may be: the ports included in port group 1 are {0,2}, the ports included in port group 2 are {4,6}, the ports included in port group 3 are {1,3}, and the ports included in port group 4 are {5,7}; or the like.

In addition, other numbers of antenna port groups and other grouping modes of antenna port are not excluded, and only the mapping relationship between layers and antenna ports is affected in the form of codeword. The codeword may be adjusted through interleaving transformation of rows based on the grouping rule of antenna ports to comply with the current grouping rule of antenna ports.

In an embodiment of the present disclosure, the first codeword determined according to at least one candidate codeword is not subjected to energy normalization processing, and a normalization coefficient may also be determined for the first codeword, and the energy normalization processing is performed on the first codeword based on the normalization coefficient. The energy normalization processing performed on the codeword is also applicable to the following embodiments.

It should also be noted that the method for determining a codebook for uplink 8 antenna ports described in each embodiment of the present disclosed may be executed by a terminal or a network device.

In summary, by determining the candidate codeword set including at least one 2-antenna port codeword and/or at least one 4-antenna port codeword, and determining the first codeword matching the number of transmission layers of the uplink channel according to at least one candidate codeword in the candidate codeword set, in which the first codeword is a codeword for partially-coherent transmission, a high-dimensional partially-coherent transmission codeword of uplink 8 antenna ports may be constructed based on a low-dimensional codeword, so that the uplink channel communication supports partially-coherent transmission of 4-port groups of 8 antenna ports, thereby further enhancing the uplink channel communication technology, effectively improving the uplink channel transmission rate, and thus improving the communication efficiency.

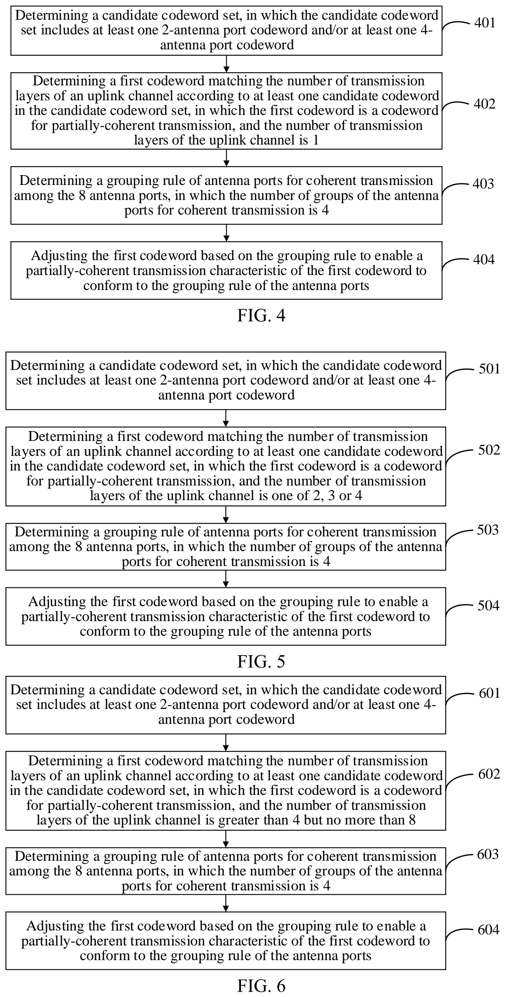

An embodiment of the present disclosure provides a method for determining a codebook for uplink 8 antenna ports. FIG. 4 is a flow chart of a method for determining a codebook for uplink 8 antenna ports provided by an embodiment of the present disclosure. The method for determining a codebook for uplink 8 antenna ports may be executed alone or in combination with any embodiment of the present disclosure or a possible implementation in the embodiments, or in combination with any technical solution in the related art.

As illustrated in FIG. 4, the method for determining a codebook for uplink 8 antenna ports includes the following steps.

At step 401, a candidate codeword set is determined, in which the candidate codeword set includes at least one 2-antenna port codeword and/or at least one 4-antenna port codeword.

In an embodiment of the present disclosure, the candidate codeword set may be determined. The candidate codeword set includes at least one 2-antenna port (2Tx) codeword and/or at least one 4-antenna port (4Tx) codeword. A first codeword of uplink 8 antenna ports (8Tx) may be determined based on the at least one candidate codeword.

It should be noted that the 8 uplink antenna ports in the embodiments of the present disclosure refer to the number of antenna ports for the terminal to send the uplink channel, and the number of antenna ports for the uplink channel is 8.

In an embodiment of the present disclosure, the number of antenna ports for the terminal to send the uplink channel is 8, and the 8 antenna ports include two polarization directions. That is, in this embodiment of the present disclosure, an arrangement of the 8 antenna ports is a dual-polarized antenna arrangement.

In some implementations, the candidate codeword set may include at least one 2Tx codeword.

In some implementations, the candidate codeword set may include at least one 4Tx codeword.

In some implementations, the candidate codeword set may include at least one 2Tx codeword and at least one 4Tx codeword.

Optionally, in the embodiments of the present disclosure, regarding the at least one 2Tx codeword and the at least one 4Tx codeword, reference may be made to an uplink 2-antenna port codebook and an uplink 4-antenna port codebook in Chapter 6.3.1.5 of 3GPP technical standard TS 38.211.

It should be understood that the codeword in each embodiment of the present disclosure may refer to a precoding matrix, and the codebook may be a collection of one or more codewords/precoding matrices.

At step 402, a first codeword matching the number of transmission layers of an uplink channel is determined according to at least one candidate codeword in the candidate codeword set, in which the first codeword is a codeword for partially-coherent transmission, and the number of transmission layers of the uplink channel is 1.

In an embodiment of the present disclosure, the number of transmission layers of the uplink channel corresponding to the first codeword is 1.

In some implementations, the first codeword may be generated by concatenating a first candidate codeword in the candidate codeword set and a first zero element matrix in a row dimension. The first candidate codeword is a 1-layer partially-coherent transmission codeword of 4 antenna ports.

It can be understood that a sum of the number of rows of the first zero element matrix and the number of rows of the first candidate codeword is 8, and the number of columns of the first zero element matrix is equal to the number of columns of the first candidate codeword.

As an example, the first codeword may be expressed as $\begin{bmatrix} A \\ \mathbf{0}_{4\times1} \end{bmatrix}_{8\times1}$ or $\begin{bmatrix} \mathbf{0}_{4\times1} \\ A \end{bmatrix}_{8\times1}$, where A represents the first candidate codeword, which is a 1-layer partially-coherent transmission codeword of 4 antenna ports. $\mathbf{0}_{4\times1}$ represents the first zero element matrix, which is a zero element matrix of 4 rows and 1 column.

Optionally, a transmission precoding matrix indicator (TPMI) corresponding to the first candidate codeword may be any one of 4-11.

In some implementations, a co-phasing coefficient may be determined, a point multiplication operation may be performed on the co-phasing coefficient and the first candidate codeword in the candidate codeword set to obtain a processed first candidate codeword, and the first candidate codeword and the processed first candidate codeword may be concatenated in the row dimension to generate the first codeword. The first candidate codeword is a 1-layer non-coherent transmission codeword of 4 antenna ports.

Optionally, the co-phasing coefficient may be determined based on a co-phasing coefficient capability supported by the communication device, and may include phase angles of 0° ($\varphi = 1$), 90° ($\varphi = j$), 180° ($\varphi = -1$), 270° ($\varphi = -j$). In addition, more phase angles may be supported, for example, more phase angles may be determined according to an angle interval of 45°.

As an example, the first codeword may be expressed as $\begin{bmatrix} A \\ \varphi A \end{bmatrix}_{8\times1}$, where A represents the first candidate codeword, which is a 1-layer non-coherent transmission codeword of 4 antenna ports. $\varphi$ represents the co-phasing coefficient.

Optionally, the TPMI corresponding to the first candidate codeword may be any one of 0-3.

In some implementations, the first codeword may be generated by concatenating the first candidate codeword in the candidate codeword set and multiple second zero element matrixes in the row dimension. The first candidate codeword is a 1-layer fully-coherent transmission codeword of 2 antenna ports.

It can be understood that a sum of the number of rows of the plurality of second zero element matrixes and the number of rows of the first candidate codeword is 8, and the number of columns of the second zero element matrix is equal to the number of columns of the first candidate codeword.

As an example, the first codeword may be expressed as $\begin{bmatrix} A \\ \mathbf{0}_{2\times1} \\ \mathbf{0}_{2\times1} \\ \mathbf{0}_{2\times1} \end{bmatrix}_{8\times1}$, or $\begin{bmatrix} \mathbf{0}_{2\times1} \\ A \\ \mathbf{0}_{2\times1} \\ \mathbf{0}_{2\times1} \end{bmatrix}_{8\times1}$, or $\begin{bmatrix} \mathbf{0}_{2\times1} \\ \mathbf{0}_{2\times1} \\ A \\ \mathbf{0}_{2\times1} \end{bmatrix}_{8\times1}$, or

$\begin{bmatrix} \mathbf{0}_{2\times1} \\ \mathbf{0}_{2\times1} \\ \mathbf{0}_{2\times1} \\ A \end{bmatrix}_{8\times1}$, where A represents the first candidate codeword, which is a 1-layer fully-coherent transmission codeword of 2 antenna ports. $\mathbf{0}_{2\times1}$ represents the second zero element matrix, which is a zero element matrix of 2 rows and 1 column.

Optionally, the TPMI corresponding to the first candidate codeword may be any one of 2-5.

At step 403, a grouping rule of antenna ports for coherent transmission among the 8 antenna ports is determined, and the number of groups of the antenna ports for coherent transmission is 4.

A grouping rule of antenna ports for coherent transmission among the 8 antenna ports may be determined, and the number of groups of the antenna ports for coherent transmission is 4. 2 antenna ports in each group may perform coherent transmission.

Optionally, with the numbering rules of the antenna ports in FIG. 3a and FIG. 3b, the grouping rule may be: the ports included in port group 1 are {0,4}, the ports included in port group 2 are {1,5}, the ports included in port group 3 are {2,6}, and the ports included in port group 4 are {3,7}; or

the grouping rule may be: the ports included in port group 1 are {0,1}, the ports included in port group 2 are {2,3}, the ports included in port group 3 are {4,5}, and the ports included in port group 4 are {6,7}; or

the grouping rule may be: the ports included in port group 1 are {0,2}, the ports included in port group 2 are {4,6}, the ports included in port group 3 are {1,3}, and the ports included in port group 4 are {5,7}; or the like.

In addition, other numbers of antenna port groups and other grouping modes of antenna port are not excluded, and only the mapping relationship between layers and antenna ports is affected in the form of codeword. The codeword may be adjusted through row transformation based on the grouping rule of antenna ports to comply with the current grouping rule of antenna ports.

At step 404, the first codeword is adjusted based on the grouping rule to enable a partially-coherent transmission characteristic of the first codeword to conform to the grouping rule of the antenna ports.

In an embodiment of the present disclosure, the first codeword may be adjusted based on the grouping rule (through interleaving transformation of rows) so that the partially-coherent transmission characteristic of the first codeword conforms to the grouping rule of the antenna ports.

In an embodiment of the present disclosure, the first codeword determined according to at least one candidate codeword is not subjected to energy normalization processing, and a normalization coefficient may also be determined for the first codeword (for example one divided by the number of non-zero elements under the square root), and the energy normalization processing is performed on the first codeword based on the normalization coefficient. The energy normalization processing performed on the codeword is also applicable to the following embodiments.

In summary, by determining the candidate codeword set including at least one 2-antenna port codeword and/or at least one 4-antenna port codeword; determining the first codeword matching the number of transmission layers of the uplink channel according to at least one candidate codeword in the candidate codeword set, in which the first codeword is a codeword for partially-coherent transmission and the number of transmission layers of the uplink channel is 1; determining the grouping rule of the antenna ports for coherent transmission among the 8 antenna ports, in which the number of groups of the antenna ports for coherent transmission is 4; and adjusting the first codeword based on the grouping rule to enable the partially-coherent transmission characteristic of the first codeword to conform to the grouping rule of the antenna ports, a high-dimensional partially-coherent transmission codeword of uplink 8 antenna ports may be constructed based on a low-dimensional codeword, so that the uplink channel communication supports partially-coherent transmission of 4-port groups of 8 antenna ports, thereby further enhancing the uplink channel communication technology, effectively improving the uplink channel transmission rate, and thus improving the communication efficiency.

An embodiment of the present disclosure provides a method for determining a codebook for uplink 8 antenna ports. FIG. 5 is a flow chart of a method for determining a codebook for uplink 8 antenna ports provided by an embodiment of the present disclosure. The method for determining a codebook for uplink 8 antenna ports may be executed alone or in combination with any embodiment of the present disclosure or a possible implementation in the embodiments, or in combination with any technical solution in the related art.

As illustrated in FIG. 5, the method for determining a codebook for uplink 8 antenna ports includes the following steps.

At step 501, a candidate codeword set is determined, in which the candidate codeword set includes at least one 2-antenna port codeword and/or at least one 4-antenna port codeword.

At step 502, a first codeword matching the number of transmission layers of an uplink channel is determined according to at least one candidate codeword in the candidate codeword set, in which the first codeword is a codeword for partially-coherent transmission, and the number of transmission layers of the uplink channel is one of 2, 3 or 4.

In an embodiment of the present disclosure, the number of transmission layers of the uplink channel corresponding to the first codeword is one of 2, 3 or 4.

In some implementations, a first concatenated codeword may be generated by concatenating a first candidate codeword in the candidate codeword set and a first zero element matrix in a row dimension, a second concatenated codeword may be generated by concatenating a second candidate codeword in the candidate codeword set and a second zero element matrix in a row dimension, and the first codeword may be generated by concatenating the first concatenated codeword and the second concatenated codeword in a column dimension. Each of the first candidate codeword and the second candidate codeword is a partially-coherent transmission codeword of 4 antenna ports. A sum of numbers of layers of the first candidate codeword and the second candidate codeword is equal to the number of layer of the first codeword.

It can be understood that a sum of the number of rows of the first zero element matrix and the number of rows of the first candidate codeword is 8, and the number of columns of the first zero element matrix is equal to the number of columns of the first candidate codeword. A sum of the number of rows of the second zero element matrix and the number of rows of the second candidate codeword is 8, and the number of columns of the second zero element matrix is equal to the number of columns of the second candidate codeword.

As an example, the first codeword may be expressed as $\begin{bmatrix} A_1 & 0_{4\times rank(A_2)} \\ 0_{4\times rank(A_1)} & A_2 \end{bmatrix}_{8\times rank}$, where $A_1$ represents the first candidate codeword, $A_2$ represents the second candidate codeword, $A_1$ and $A_2$ each is a partially-coherent transmission codeword of 4 antenna ports. $rank(A_1)$ represents the number of transmission layers corresponding to the first candidate codeword, $rank(A_2)$ represents the number of transmission layers corresponding to the second candidate codeword, $rank$ represents the number of transmission layers corresponding to the first codeword, $rank = rank(A_1) + rank(A_2)$. $0_{4\times rank(A_1)}$ represents the first zero element matrix, and $0_{4\times rank(A_2)}$ represents the second zero element matrix.

Optionally, when rank=2 (that is, the number of layers of the first codeword is 2), the first candidate codeword $A_1$ may be a 1-layer partially-coherent transmission codeword of 4 antenna ports, and the corresponding TPMI may be any one of 4-11; and the second candidate codeword $A_2$ may be a 1-layer partially-coherent transmission codeword of 4 antenna ports, and the corresponding TPMI may be any one of 4-11. The first candidate codeword and the second candidate codeword may be the same codeword or different codewords.

When rank=3 (that is, the number of layers of the first codeword is 3), the first candidate codeword $A_1$ may be a 2-layer partially-coherent transmission codeword of 4 antenna ports, and the corresponding TPMI may be any one of 6-13; and the second candidate codeword $A_2$ may be a 1-layer partially-coherent transmission codeword of 4 antenna ports, and the corresponding TPMI may be any one of 4-11. Or, the first candidate codeword $A_1$ may be a 1-layer partially-coherent transmission codeword of 4 antenna ports, and the corresponding TPMI may be any one of 4-11; and the second candidate codeword $A_2$ may be a 2-layer partially-coherent transmission codeword of 4 antenna ports, and the corresponding TPMI may be any one of 6-13.

**When** rank=4 (that is, the number of layers of the first codeword is 4), the first candidate codeword $A_1$ may be a 2-layer partially-coherent transmission codeword of 4 antenna ports, and the corresponding TPMI may be any one of 6-13; and the second candidate codeword $A_2$ may be a 2-layer partially-coherent transmission codeword of 4 antenna ports, and the corresponding TPMI may be any one of 6-13. The first candidate codeword and the second candidate codeword may be the same codeword or different codewords.

**In** some implementations, a co-phasing coefficient may be determined, a point multiplication operation may be performed on the co-phasing coefficient and the first candidate codeword in the candidate codeword set to obtain a processed first candidate codeword, and the first candidate codeword and the processed first candidate codeword may be concatenated in the row dimension to generate the first codeword. The first candidate codeword is a non-coherent transmission codeword of 4 antenna ports, and the number of layers of the first candidate codeword is equal to the number of layers of the first codeword.

Optionally, the co-phasing coefficient may be determined based on a co-phasing coefficient capability supported by the communication device, and may include phase angles of 0° ($\varphi = 1$), 90° ($\varphi = j$), 180° ($\varphi = -1$), 270° ($\varphi = -j$). In addition, more phase angles may be supported, for example, more phase angles may be determined according to an angle interval of 45°.

As an example, the first codeword may be expressed as $\begin{bmatrix} A \\ \varphi A \end{bmatrix}_{8\times1}$ , where A represents the first candidate codeword, which is a 1-layer non-coherent transmission codeword of 4 antenna ports. $\varphi$ represents the co-phasing coefficient.

Optionally, when rank=2 (that is, the number of layers of the first codeword is 2), the first candidate codeword $A$ may be a 2-layer non-coherent transmission codeword of 4 antenna ports, and the corresponding TPMI may be any one of 0-5.

When rank=3 (that is, the number of layers of the first codeword is 3), the first candidate codeword $A$ may be a 3-layer non-coherent transmission codeword of 4 antenna ports, and the corresponding TPMI may be 0.

When rank=4 (that is, the number of layers of the first codeword is 4), the first candidate codeword $A$ may be a 4-layer non-coherent transmission codeword of 4 antenna ports, and the corresponding TPMI may be 0.

In some implementations, a first concatenated codeword may be generated by concatenating the first candidate codeword in the candidate codeword set and multiple second zero element matrixes in the row dimension, and the first codeword may be generated by concatenating a number of transmission layers of first concatenated codewords in the column dimension. The first candidate codeword is a 1-layer fully-coherent transmission codeword of 2 antenna ports.

It can be understood that a sum of the number of rows of the first zero element matrix and the number of rows of the first candidate codeword is 8, and the number of columns of the first zero element matrix is equal to the number of columns of the first candidate codeword.

As an example, when rank=2 (that is, the number of layers of the first codeword is 2), the first codeword may be

expressed as $\begin{bmatrix} A_1 & 0_{2\times rank(A_2)} \\ 0_{2\times rank(A_1)} & A_2 \\ 0_{4\times rank(A_1)} & 0_{4\times rank(A_2)} \end{bmatrix}_{8\times rank}$ , where candidate codewords $A_1$ and $A_2$ each is a 1-layer fully-coherent transmission codeword of 2 antenna ports. $rank(A_1)$ represents the number of transmission layers corresponding to the candidate codeword $A_1$, $rank(A_2)$ represents the number of transmission layers corresponding to the candidate codeword $A_2$, $rank$ represents the number of transmission layers corresponding to the first codeword, $rank = rank(A_1) + rank(A_2)$ $0_{2\times rank(A_1)}$, $0_{2\times rank(A_2)}$, $0_{4\times rank(A_1)}$, $0_{4\times rank(A_2)}$ each represents the zero element matrix.

Optionally, the candidate codeword $A_1$ may be a 1-layer fully-coherent transmission codeword of 2 antenna ports, and the corresponding TPMI may be any one of 2-5; and the candidate codeword $A_2$ may be a 1-layer fully-coherent transmission codeword of 2 antenna ports; and the corresponding TPMI may be any one of 2-5. The candidate codeword $A_1$ and the candidate codeword $A_2$ may be the same codeword or different codewords.

As an example, when rank=3 (that is, the number of layers of the first codeword is 3), the first codeword may be

expressed as $\begin{bmatrix} A_1 & 0_{2\times rank(A_2)} & 0_{2\times rank(A_3)} \\ 0_{2\times rank(A_1)} & A_2 & 0_{2\times rank(A_3)} \\ 0_{2\times rank(A_1)} & 0_{2\times rank(A_2)} & A_3 \\ 0_{2\times rank(A_1)} & 0_{2\times rank(A_2)} & 0_{2\times rank(A_3)} \end{bmatrix}_{8\times rank}$ , where candidate codewords $A_1$, $A_2$ and $A_3$ each is a 1-layer fully-coherent transmission codeword of 2 antenna ports. $rank(A_1)$ represents the number of transmission layers corresponding to the candidate codeword $A_1$, $rank(A_2)$ represents the number of transmission layers corresponding to the candidate codeword $A_2$, $rank(A_3)$ represents the number of transmission layers corresponding to the candidate codeword $A_3$, $rank$ represents the number of transmission layers corresponding to the first codeword, $rank = rank(A_1) + rank(A_2) + rank(A_3)$. $0_{2\times rank(A_1)}$, $0_{2\times rank(A_2)}$, $0_{2\times rank(A_3)}$ each represents the zero element matrix.

Optionally, the candidate codeword $A_1$ may be a 1-layer fully-coherent transmission codeword of 2 antenna ports, and the corresponding TPMI may be any one of 2-5; the candidate codeword $A_2$ may be a 1-layer fully-coherent transmission codeword of 2 antenna ports, and the corresponding TPMI may be any one of 2-5; and the candidate codeword $A_3$ may be a 1-layer fully-coherent transmission codeword of 2 antenna ports, and the corresponding TPMI may be any one of 2-5. The candidate codeword $A_1$, the candidate codeword $A_2$ and the candidate codeword $A_3$ may be the same codeword or different codewords.

As an example, when rank=4 (that is, the number of layers of the first codeword is 4), the first codeword may be

expressed as $\begin{bmatrix} A_1 & 0_{2\times rank(A_2)} & 0_{2\times rank(A_3)} & 0_{2\times rank(A_4)} \\ 0_{2\times rank(A_1)} & A_2 & 0_{2\times rank(A_3)} & 0_{2\times rank(A_4)} \\ 0_{2\times rank(A_1)} & 0_{2\times rank(A_2)} & A_3 & 0_{2\times rank(A_4)} \\ 0_{2\times rank(A_1)} & 0_{2\times rank(A_2)} & 0_{2\times rank(A_3)} & A_4 \end{bmatrix}_{8\times rank}$ , where candidate code-

words $A_1$, $A_2$, $A_3$ and $A_4$ each is a 1-layer fully-coherent transmission codeword of 2 antenna ports. $rank(A_1)$ represents the number of transmission layers corresponding to the candidate codeword $A_1$, $rank(A_2)$ represents the number of transmission layers corresponding to the candidate codeword $A_2$, $rank(A_3)$ represents the number of transmission layers corresponding to the candidate codeword $A_3$, $rank(A_4)$ represents the number of transmission layers corresponding to the candidate codeword $A_4$, $rank$ represents the number of transmission layers corresponding to the first codeword, $rank = rank(A_1) + rank(A_2) + rank(A_3) + rank(A_4)$. $\mathbf{0}_{2 \times rank(A_1)}$, $\mathbf{0}_{2 \times rank(A_2)}$, $\mathbf{0}_{2 \times rank(A_3)}$, $\mathbf{0}_{2 \times rank(A_4)}$ each represents the zero element matrix.

Optionally, the candidate codeword $A_1$ may be a 1-layer fully-coherent transmission codeword of 2 antenna ports, and the corresponding TPMI may be any one of 2-5; the candidate codeword $A_2$ may be a 1-layer fully-coherent transmission codeword of 2 antenna ports, and the corresponding TPMI may be any one of 2-5; the candidate codeword $A_3$ may be a 1-layer fully-coherent transmission codeword of 2 antenna ports, and the corresponding TPMI may be any one of 2-5; and the candidate codeword $A_4$ may be a 1-layer fully-coherent transmission codeword of 2 antenna ports, and the corresponding TPMI may be any one of 2-5. The candidate codeword $A_1$, the candidate codeword $A_2$, the candidate codeword $A_3$ and the candidate codeword $A_4$ may be the same codeword or different codewords.

At step 503, a grouping rule of antenna ports for coherent transmission among the 8 antenna ports is determined, and the number of groups of the antenna ports for coherent transmission is 4.

At step 504, the first codeword is adjusted based on the grouping rule to enable a partially-coherent transmission characteristic of the first codeword to conform to the grouping rule of the antenna ports.

In this embodiment of the present disclosure, step 501, step 503 and step 504 can be implemented in any way in the embodiments of the present disclosure, which is not limited in this embodiment of the present disclosure, and details will not be repeated.

In summary, by determining the candidate codeword set including at least one 2-antenna port codeword and/or at least one 4-antenna port codeword; determining the first codeword matching the number of transmission layers of the uplink channel according to at least one candidate codeword in the candidate codeword set, in which the first codeword is a codeword for partially-coherent transmission and the number of transmission layers of the uplink channel is one of 2, 3 or 4; determining the grouping rule of the antenna ports for coherent transmission among the 8 antenna ports, in which the number of groups of the antenna ports for coherent transmission is 4; and adjusting the first codeword based on the grouping rule to enable the partially-coherent transmission characteristic of the first codeword to conform to the grouping rule of the antenna ports, a high-dimensional partially-coherent transmission codeword of uplink 8 antenna ports may be constructed based on a low-dimensional codeword, so that the uplink channel communication supports partially-coherent transmission of 4-port groups of 8 antenna ports, thereby further enhancing the uplink channel communication technology, effectively improving the uplink channel transmission rate, and thus improving the communication efficiency.

An embodiment of the present disclosure provides a method for determining a codebook for uplink 8 antenna ports. FIG. 6 is a flow chart of a method for determining a codebook for uplink 8 antenna ports provided by an embodiment of the present disclosure. The method for determining a codebook for uplink 8 antenna ports may be executed alone or in combination with any embodiment of the present disclosure or a possible implementation in the embodiments, or in combination with any technical solution in the related art.

As illustrated in FIG. 6, the method for determining a codebook for uplink 8 antenna ports includes the following steps.

At step 601, a candidate codeword set is determined, in which the candidate codeword set includes at least one 2-antenna port codeword and/or at least one 4-antenna port codeword.

At step 602, a first codeword matching the number of transmission layers of an uplink channel is determined according to at least one candidate codeword in the candidate codeword set, in which the first codeword is a codeword for partially-coherent transmission, and the number of transmission layers of the uplink channel is greater than 4 but no more than 8.

In an embodiment of the present disclosure, the number of transmission layers of the uplink channel corresponding to the first codeword is greater than 4 but no more than 8, i.e., one of 5, 6, 7, or 8.

In some implementations, a first concatenated codeword may be generated by concatenating a first candidate codeword in the candidate codeword set and multiple second zero element matrixes in a row dimension, a second concatenated codeword may be generated by concatenating a second candidate codeword in the candidate codeword set and the plurality of second zero element matrixes in a row dimension, a third concatenated codeword may be generated by concatenating a third candidate codeword in the candidate codeword set and multiple second zero element matrixes in a row dimension, a fourth concatenated codeword may be generated by concatenating a fourth candidate codeword in the candidate codeword set and the plurality of second zero element matrixes in a row dimension, and the first codeword may be generated by concatenating the first concatenated codeword, the second concatenated codeword, the third concatenated codeword and the fourth concatenated codeword in a column dimension. Each of the first candidate codeword and the second candidate codeword is a fully-coherent transmission codeword of 2 antenna ports. A sum of numbers of layers of the first candidate codeword, the second candidate codeword, the third candidate codeword and the fourth candidate codeword is equal to the number of layer of the first codeword.

As an example, the first codeword may be expressed as

$$\begin{bmatrix} A_1 & 0_{2\times rank(A_2)} & 0_{2\times rank(A_3)} & 0_{2\times rank(A_4)} \\ 0_{2\times rank(A_1)} & A_2 & 0_{2\times rank(A_3)} & 0_{2\times rank(A_4)} \\ 0_{2\times rank(A_1)} & 0_{2\times rank(A_2)} & A_3 & 0_{2\times rank(A_4)} \\ 0_{2\times rank(A_1)} & 0_{2\times rank(A_2)} & 0_{2\times rank(A_3)} & A_4 \end{bmatrix}_{8\times rank}$$ , where the first candidate codeword

$A_1$, the second candidate codeword $A_2$, the third candidate codeword $A_3$ and the fourth candidate codeword $A_4$ each is a fully-coherent transmission codeword of 2 antenna ports. $rank(A_1)$ represents the number of transmission layers corresponding to the first candidate codeword, $rank(A_2)$ represents the number of transmission layers corresponding to the second candidate codeword, $rank(A_3)$ represents the number of transmission layers corresponding to the third candidate codeword, $rank(A_4)$ represents the number of transmission layers corresponding to the fourth candidate codeword, $rank$ represents the number of transmission layers corresponding to the first codeword, $rank = rank(A_1) + rank(A_2) + rank(A_3) + rank(A_4)$. $0_{2\times rank(A_1)}$, $0_{2\times rank(A_2)}$, $0_{2\times rank(A_3)}$, $0_{2\times rank(A_4)}$ each represents the zero element matrix.

Optionally, when rank=5 (that is, the number of layers of the first codeword is 5), any one of the four candidate codewords may be a 2-layer fully-coherent transmission codeword of 2 antenna ports, and the corresponding TPMI may be any one of 1-2; and each of the other three candidate codewords may be a 1-layer fully-coherent transmission codeword of 2 antenna ports, and the corresponding TPMI may be any one of 2-5. For example, the first candidate codeword $A_1$ may be a 2-layer fully-coherent transmission codeword of 2 antenna ports, and each of the second candidate codeword $A_2$, the third candidate codeword $A_3$ and the fourth candidate codeword $A_4$ may be a 1-layer fully-coherent transmission codeword of 2 antenna ports; or the second candidate codeword $A_2$ may be a 2-layer fully-coherent transmission codeword of 2 antenna ports, and each of the first candidate codeword $A_1$, the third candidate codeword $A_3$ and the fourth candidate codeword $A_4$ may be a 1-layer fully-coherent transmission codeword of 2 antenna ports. The first candidate codeword $A_1$, the second candidate codeword $A_2$, the third candidate codeword $A_3$ and the fourth candidate codeword $A_4$ may be the same codeword or different codewords.

When rank=6 (that is, the number of layers of the first codeword is 6), each of any two of the four candidate codewords may be a 2-layer fully-coherent transmission codeword of 2 antenna ports, and the corresponding TPMI may be any one of 1-2; and each of the other two candidate codewords may be a 1-layer fully-coherent transmission codeword of 2 antenna ports, and the corresponding TPMI may be any one of 2-5. For example, each of the first candidate codeword $A_1$ and the second candidate codeword $A_2$ may be a 2-layer fully-coherent transmission codeword of 2 antenna ports, and each of the third candidate codeword $A_3$ and the fourth candidate codeword $A_4$ may be a 1-layer fully-coherent transmission codeword of 2 antenna ports; or each of the second candidate codeword $A_2$ and the third candidate codeword $A_3$ may be a 2-layer fully-coherent transmission codeword of 2 antenna ports, and each of the first candidate codeword $A_1$ and the fourth candidate codeword $A_4$ may be a 1-layer fully-coherent transmission codeword of 2 antenna ports. The first candidate codeword $A_1$, the second candidate codeword $A_2$, the third candidate codeword $A_3$ and the fourth candidate codeword $A_4$ may be the same codeword or different codewords.

When rank=7 (that is, the number of layers of the first codeword is 7), each of any three of the four candidate codewords may be a 2-layer fully-coherent transmission codeword of 2 antenna ports, and the corresponding TPMI may be any one of 1-2; and the other one candidate codeword may be a 1-layer fully-coherent transmission codeword of 2 antenna ports, and the corresponding TPMI may be any one of 2-5. For example, each of the first candidate codeword $A_1$, the second candidate codeword $A_2$ and the third candidate codeword $A_3$ may be a 2-layer fully-coherent transmission codeword of 2 antenna ports, and the fourth candidate codeword $A_4$ may be a 1-layer fully-coherent transmission codeword of 2 antenna ports; or each of the second candidate codeword $A_2$, the third candidate codeword $A_3$ and the fourth candidate codeword $A_4$ may be a 2-layer fully-coherent transmission codeword of 2 antenna ports, and the first candidate codeword $A_1$ may be a 1-layer fully-coherent transmission codeword of 2 antenna ports. The first candidate codeword $A_1$, the second candidate codeword $A_2$, the third candidate codeword $A_3$ and the fourth candidate codeword $A_4$ may be the same codeword or different codewords.

When rank=8 (that is, the number of layers of the first codeword is 8), each of the four candidate codewords may be a 2-layer fully-coherent transmission codeword of 2 antenna ports, and the corresponding TPMI may be any one of 1-2. That is, each of the first candidate codeword $A_1$, the second candidate codeword $A_2$, the third candidate codeword $A_3$ and the fourth candidate codeword $A_4$ may be a 2-layer fully-coherent transmission codeword of 2 antenna ports, and the corresponding TPMI may be any one of 1-2. The first candidate codeword $A_1$, the second candidate codeword $A_2$, the third candidate codeword $A_3$ and the fourth candidate codeword $A_4$ may be the same codeword or different codewords.

In some implementations, a co-phasing coefficient may be determined, a point multiplication operation may be performed on the co-phasing coefficient and the first candidate codeword in the candidate codeword set to obtain a processed first candidate codeword, a point multiplication operation may be performed on a complex number of the co-phasing coefficient and the second candidate codeword in the candidate codeword set to obtain a processed second candidate codeword, the first candidate codeword and the processed first candidate codeword may be concatenated in the row dimension to generate a first concatenated codeword, the second candidate codeword and the processed second candidate codeword may be concatenated in the row dimension to generate a second concatenated codeword, and the first concatenated codeword and the second concatenated codeword may be concatenated in the column dimension to generate the first codeword. The first candidate codeword and the second candidate codeword each is a non-coherent transmission codeword of 4 antenna ports, and a sum of the numbers of layers of the first candidate codeword and the second candidate codeword is equal to the number of layers of the first codeword.

Optionally, the co-phasing coefficient may be determined based on a co-phasing coefficient capability supported by the communication device, and may include phase angles of 0° $(\varphi = 1)$, 90° $(\varphi = j)$, 180° $(\varphi = -1)$, 270° $(\varphi = -j)$. In addition, more phase angles may be supported, for example, more phase angles may be determined according to an angle interval of 45°.

As an example, the first codeword may be expressed as $\begin{bmatrix} A_1 & A_2 \\ \varphi A_1 & -\varphi A_2 \end{bmatrix}_{8 \times rank}$, where the first candidate codeword $A_1$ and the second candidate codeword $A_2$ each is a non-coherent transmission codeword of 4 antenna ports. $rank(A_1)$ represents the number of transmission layers corresponding to the first candidate codeword $A_1$, $rank(A_2)$ represents the number of transmission layers corresponding to the second candidate codeword $A_2$, $rank$ represents the number of transmission layers corresponding to the first codeword, $rank = rank(A_1) + rank(A_2)$.

Optionally, when rank=5 (that is, the number of layers of the first codeword is 5), as a possible implementation, the first candidate codeword $A_1$ may be a 1-layer non-coherent transmission codeword of 4 antenna ports, and the corresponding TPMI may be any one of 0-3; and the second candidate codeword $A_2$ may be a 4-layer non-coherent transmission codeword of 4 antenna ports, and the corresponding TPMI may be 0.

As another possible implementation, the first candidate codeword $A_1$ may be a 2-layer non-coherent transmission codeword of 4 antenna ports, and the corresponding TPMI may be any one of 2, 4 or 5; and the second candidate codeword $A_2$ may be a 3-layer non-coherent transmission codeword of 4 antenna ports, and the corresponding TPMI may be 0.

As another possible implementation, the first candidate codeword $A_1$ may be a 3-layer non-coherent transmission codeword of 4 antenna ports, and the corresponding TPMI may be 0; and the second candidate codeword $A_2$ may be a 2-layer non-coherent transmission codeword of 4 antenna ports, and the corresponding TPMI may be any one of 2, 4 or 5.

As another possible implementation, the first candidate codeword $A_1$ may be a 4-layer non-coherent transmission codeword of 4 antenna ports, and the corresponding TPMI may be 0; and the second candidate codeword $A_2$ may be a 1-layer non-coherent transmission codeword of 4 antenna ports, and the corresponding TPMI may be any one of 0-3.

When rank=6 (that is, the number of layers of the first codeword is 6), as a possible implementation, the first candidate codeword $A_1$ may be a 2-layer non-coherent transmission codeword of 4 antenna ports, and the corresponding TPMI may be any one of 0-5; and the second candidate codeword $A_2$ may be a 4-layer non-coherent transmission codeword of 4 antenna ports, and the corresponding TPMI may be 0.

As another possible implementation, the first candidate codeword $A_1$ may be a 4-layer non-coherent transmission codeword of 4 antenna ports, and the corresponding TPMI may be 0; and the second candidate codeword $A_2$ may be a 2-layer non-coherent transmission codeword of 4 antenna ports, and the corresponding TPMI may be any one of 0-5.

When rank=7 (that is, the number of layers of the first codeword is 7), as a possible implementation, the first candidate codeword $A_1$ may be a 3-layer non-coherent transmission codeword of 4 antenna ports, and the corresponding TPMI may be 0; and the second candidate codeword $A_2$ may be a 4-layer non-coherent transmission codeword of 4 antenna ports, and the corresponding TPMI may be 0.

As another possible implementation, the first candidate codeword $A_1$ may be a 4-layer non-coherent transmission codeword of 4 antenna ports, and the corresponding TPMI may be 0; and the second candidate codeword $A_2$ may be a 3-layer non-coherent transmission codeword of 4 antenna ports, and the corresponding TPMI may be 0.

When rank=8 (that is, the number of layers of the first codeword is 8), each of the first candidate codeword $A_1$ and the second candidate codeword $A_2$ may be a 4-layer non-coherent transmission codeword of 4 antenna ports, and the corresponding TPMI may be 0.

In some implementations, a co-phasing coefficient may be determined, a point multiplication operation may be performed on the co-phasing coefficient and the first candidate codeword in the candidate codeword set to obtain a processed first candidate codeword, a point multiplication operation may be performed on a complex number of the co-phasing coefficient and the second candidate codeword in the candidate codeword set to obtain a processed second candidate codeword, the third candidate codeword in the candidate codeword set and the processed first candidate codeword may be concatenated in the row dimension to generate a first concatenated codeword, the fourth candidate codeword in the candidate codeword set and the processed second candidate codeword may be concatenated in the row dimension to generate a second concatenated codeword, and the first concatenated codeword and the second concatenated codeword may be concatenated in the column dimension to generate the first codeword. The first candidate codeword, the second candidate codeword, the third candidate codeword and the fourth candidate codeword each is a non-coherent transmission codeword of 4 antenna ports. The number of the layers of the first candidate codeword is the same as that of the third candidate codeword. The number of the layers of the second candidate codeword is the same as that of the fourth candidate codeword. A sum of the numbers of layers of the first candidate codeword and the second candidate codeword is equal to the number of layers of the first codeword.

Optionally, the co-phasing coefficient may be determined based on a co-phasing coefficient capability supported by the communication device, and may include phase angles of 0° ($\varphi = 1$), 90° ($\varphi = j$), 180° ($\varphi = -1$), 270° ($\varphi = -j$). In addition, more phase angles may be supported, for example, more phase angles may be determined according to an angle interval of 45°.

As an example, the first codeword may be expressed as $\begin{bmatrix} A_1 & A_2 \\ \varphi B_1 & -\varphi B_2 \end{bmatrix}_{8 \times rank}$, where the first candidate codeword $B_1$ and the second candidate codeword $B_2$, the third candidate codeword $A_1$ and the fourth candidate codeword $A_2$ each is a non-coherent transmission codeword of 4 antenna ports. *rank* represents the number of transmission layers corresponding to the first codeword.

Optionally, when rank=5 (that is, the number of layers of the first codeword is 5), as a possible implementation, each of the first candidate codeword $B_1$ and the third candidate codeword $A_1$ may be a 1-layer non-coherent transmission codeword of 4 antenna ports, and the corresponding TPMI may be any one of 0-3; and each of the second candidate codeword $B_2$ and the fourth candidate codeword $A_2$ may be a 4-layer non-coherent transmission codeword of 4 antenna ports, and the corresponding TPMI may be 0. The first candidate codeword and the third candidate codeword may be the same codeword or different codewords. The second candidate codeword, the third candidate codeword and the fourth candidate codeword may be the same codeword or different codewords.

As another possible implementation, each of the first candidate codeword $B_1$ and the third candidate codeword $A_1$ may be may be a 2-layer non-coherent transmission codeword of 4 antenna ports, and the corresponding TPMI may be any one of 2, 4 or 5; and each of the second candidate codeword $B_2$ and the fourth candidate codeword $A_2$ may be a 3-layer non-coherent transmission codeword of 4 antenna ports, and the corresponding TPMI may be 0. The first candidate codeword and the third candidate codeword may be the same codeword or different codewords. The second candidate codeword, the third candidate codeword and the fourth candidate codeword may be the same codeword or different codewords.

As another possible implementation, each of the first candidate codeword $B_1$ and the third candidate codeword $A_1$ may be a 3-layer non-coherent transmission codeword of 4 antenna ports, and the corresponding TPMI may be 0; and each of the second candidate codeword $B_2$ and the fourth candidate codeword $A_2$ may be a 2-layer non-coherent transmission codeword of 4 antenna ports, and the corresponding TPMI may be any one of 2, 4 or 5. The first candidate codeword and the third candidate codeword may be the same codeword or different codewords. The second candidate codeword, the third candidate codeword and the fourth candidate codeword may be the same codeword or different codewords.

As another possible implementation, each of the first candidate codeword $B_1$ and the third candidate codeword $A_1$ may be a 4-layer non-coherent transmission codeword of 4 antenna ports, and the corresponding TPMI may be 0; and each of the second candidate codeword $B_2$ and the fourth candidate codeword $A_2$ may be a 1-layer non-coherent transmission codeword of 4 antenna ports, and the corresponding TPMI may be any one of 0-3. The first candidate codeword and the third candidate codeword may be the same codeword or different codewords. The second candidate codeword, the third candidate codeword and the fourth candidate codeword may be the same codeword or different codewords.

When rank=6 (that is, the number of layers of the first codeword is 6), as a possible implementation, each of the first candidate codeword $B_1$ and the third candidate codeword $A_1$ may be a 2-layer non-coherent transmission codeword of 4 antenna ports, and the corresponding TPMI may be any one of 0-5; and each of the second candidate codeword $B_2$ and the fourth candidate codeword $A_2$ may be a 4-layer non-coherent transmission codeword of 4 antenna ports, and the corresponding TPMI may be 0. The first candidate codeword and the third candidate codeword may be the same codeword or different codewords. The second candidate codeword, the third candidate codeword and the fourth candidate codeword may be the same codeword or different codewords.

As another possible implementation, each of the first candidate codeword $B_1$ and the third candidate codeword $A_1$ may be a 4-layer non-coherent transmission codeword of 4 antenna ports, and the corresponding TPMI may be 0; and each of the second candidate codeword $B_2$ and the fourth candidate codeword $A_2$ may be a 2-layer non-coherent transmission codeword of 4 antenna ports, and the corresponding TPMI may be any one of 0-5. The first candidate codeword and the third candidate codeword may be the same codeword or different codewords. The second candidate codeword, the third candidate codeword and the fourth candidate codeword may be the same codeword or different codewords.

When rank=7 (that is, the number of layers of the first codeword is 7), as a possible implementation, each of the first candidate codeword $B_1$ and the third candidate codeword $A_1$ may be a 3-layer non-coherent transmission codeword of 4 antenna ports, and the corresponding TPMI may be 0; and each of the second candidate codeword $B_2$ and the fourth candidate codeword $A_2$ may be a 4-layer non-coherent transmission codeword of 4 antenna ports, and the corresponding TPMI may be 0.

As another possible implementation, each of the first candidate codeword $B_1$ and the third candidate codeword $A_1$ may be a 4-layer non-coherent transmission codeword of 4 antenna ports, and the corresponding TPMI may be 0; and each of the second candidate codeword $B_2$ and the fourth candidate codeword $A_2$ may be a 3-layer non-coherent transmission codeword of 4 antenna ports, and the corresponding TPMI may be 0.

When rank=8 (that is, the number of layers of the first codeword is 8), each of the first candidate codeword $B_1$ and the second candidate codeword $B_2$, the third candidate codeword $A_1$ and the fourth candidate codeword $A_2$ may be a 4-layer non-coherent transmission codeword of 4 antenna ports, and the corresponding TPMI may be 0.

At step 603, a grouping rule of antenna ports for coherent transmission among the 8 antenna ports is determined, in which the number of groups of the antenna ports for coherent transmission is 4.

At step 604, the first codeword is adjusted based on the grouping rule to enable a partially-coherent transmission characteristic of the first codeword to conform to the grouping rule of the antenna ports.

In this embodiment of the present disclosure, step 601, step 603 and step 604 can be implemented in any way in the embodiments of the present disclosure, which is not limited in this embodiment of the present disclosure, and details will not be repeated.

In summary, by determining the candidate codeword set including at least one 2-antenna port codeword and/or at least one 4-antenna port codeword; determining the first codeword matching the number of transmission layers of the uplink channel according to at least one candidate codeword in the candidate codeword set, in which the first codeword is a codeword for partially-coherent transmission and the number of transmission layers of the uplink channel is greater than 4 but no more than 8; determining the grouping rule of the antenna ports for coherent transmission among the 8 antenna ports, in which the number of groups of the antenna ports for coherent transmission is 4; and adjusting the first codeword based on the grouping rule to enable the partially-coherent transmission characteristic of the first codeword to conform to the grouping rule of the antenna ports, a high-dimensional partially-coherent transmission codeword of uplink 8 antenna ports may be constructed based on a low-dimensional codeword, so that the uplink channel communication supports partially-coherent transmission of 4-port groups of 8 antenna ports, thereby further enhancing the uplink channel communication technology, effectively improving the uplink channel transmission rate, and thus improving the communication efficiency.

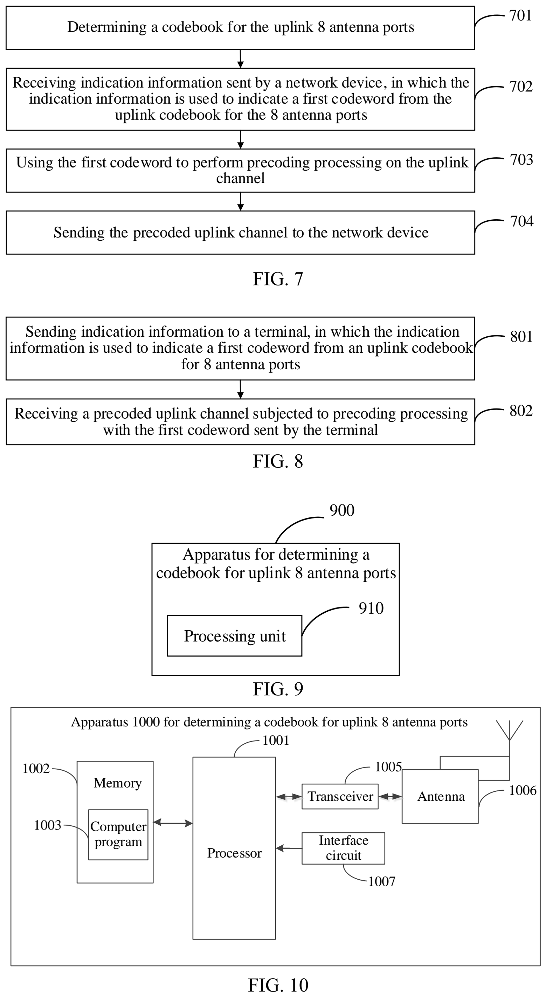

An embodiment of the present disclosure provides an uplink channel communication method based on a codebook for uplink 8 antenna ports. FIG. 7 is a flow chart of an uplink channel communication method based on a codebook for uplink 8 antenna ports provided by an embodiment of the present disclosure. The method may be performed by a terminal. The method may be executed alone or in combination with any embodiment of the present disclosure or a possible implementation in the embodiments, or in combination with any technical solution in the related art. As illustrated in FIG. 7, the uplink channel communication method based on a codebook for uplink 8 antenna ports includes the following steps.

At step 701, a codebook for the uplink 8 antenna ports is determined.

It can be understood that the terminal may determine a codebook that matches the number of its own antenna ports. In an embodiment of the present disclosure, the number of antenna ports for the terminal to send the uplink channel is 8, and the codebook for the uplink 8 antenna ports is determined.

In this embodiment of the present disclosure, the terminal may determine the codebook of the uplink 8 antenna ports by using any of the methods in the aforementioned embodiments, which will be not described again in this embodiment of the present disclosure.

At step 702, indication information sent by a network device is received, in which the indication information is used to indicate a first codeword from the uplink codebook for the 8 antenna ports.

In an embodiment of the present disclosure, optionally, the indication information may be TPMI information, in which the TPMI information carries codebook design information.

The TPMI is used to indicate the first codeword in the codebook.

At step 703, the first codeword is used to perform precoding processing on the uplink channel.

In an embodiment of the present disclosure, the terminal may determine the corresponding first codeword from the codebook according to the indication information sent by the network device, and then the terminal may use the determined first codeword to perform precoding processing on the uplink channel to complete transmission of the uplink channel.

At step 704, the precoded uplink channel is sent to the network device.

In an embodiment of the present disclosure, after the terminal uses the first codeword to perform precoding processing on the uplink channel, the terminal may map the precoded data to the corresponding antenna port and send the precoded uplink channel to the network device.

In this embodiment of the present disclosure, the uplink channel may be a physical uplink shared channel (PUSCH).

With the method for determining a codebook for uplink 8 antenna ports in this embodiment of the present disclosure, by determining the codebook for the uplink 8 antenna ports; receiving the indication information sent by the network device, in which the indication information is used to indicate the first codeword from the codebook for the uplink 8 antenna ports; using the first codeword to perform precoding processing on the uplink channel; and sending the precoded uplink channel to the network device, the codebook-based uplink transmission may be realized, thereby realizing precoded spatial multiplexing of the uplink channel, effectively improving the uplink channel communication rate, improving a flexibility of the codebook-based uplink transmission, and saving system overhead.

An embodiment of the present disclosure provides an uplink channel communication method based on a codebook for uplink 8 antenna ports. FIG. 8 is a flow chart of an uplink channel communication method based on a codebook for uplink 8 antenna ports provided by an embodiment of the present disclosure. The method may be performed by a network device. The method may be executed alone or in combination with any embodiment of the present disclosure or a possible implementation in the embodiments, or in combination with any technical solution in the related art. As illustrated in FIG. 8, the uplink channel communication method based on a codebook for uplink 8 antenna ports includes the following steps.

At step 801, indication information is sent to a terminal, in which the indication information is used to indicate a first codeword from an uplink codebook for 8 antenna ports.

The codebook is a codebook that matches the number of antenna ports used for the terminal to send the uplink channel, and the number of the antenna ports for the uplink channel is 8.

In an embodiment of the present disclosure, the codebook may be determined by using any of the methods in the aforementioned embodiments, which will be not described in the embodiments of the present disclosure.

In an embodiment of the present disclosure, optionally, the indication information may be TPMI information, in which the TPMI information carries codebook design information.

The TPMI is used to indicate the first codeword in the codebook.

At step 802, a precoded uplink channel subjected to precoding processing with the first codeword sent by the terminal is received.

In an embodiment of the present disclosure, after the network device sends the first indication information to the terminal, the terminal may use the first codeword to perform precoding processing on the uplink channel and send the precoded uplink channel (the uplink channel subjected to the precoding processing) to the network device to complete transmission of the uplink channel.

The terminal may map the precoded data to the corresponding antenna port and send the precoded uplink data channel to the network device. The network device may receive the precoded uplink channel subjected to the precoding processing via the precoding matrix sent by the terminal.

In this embodiment of the present disclosure, the uplink channel may be a physical uplink shared channel (PUSCH).

With the method for determining a codebook for uplink 8 antenna ports in this embodiment of the present disclosure, by determining the codebook for the uplink 8 antenna ports; receiving the indication information sent by the network device, in which the indication information is used to indicate the first codeword from the codebook for the uplink 8 antenna ports; using the first codeword to perform precoding processing on the uplink channel; and sending the precoded uplink channel to the network device, the codebook-based uplink transmission may be realized, thereby realizing precoded spatial multiplexing of the uplink channel, effectively improving the uplink channel communication rate, improving a flexibility of the codebook-based uplink transmission, and saving system overhead.

In the embodiments provided by the present disclosure, the method in the embodiments of the present disclosure is described. To perform functions of the methods provided in the above embodiments, the network device and the terminal may include a hardware structure and a software module, and realize the above functions with the hardware structure, the software module, or a combination of the hardware structure and the software module. A specific function may be performed as the hardware structure, the software module, or the hardware structure plus the software module.

Corresponding to the method for determining a codebook for uplink 8 antenna ports provided in the embodiments of FIG. 2 to FIG. 5 above, the present disclosure also provides an apparatus for determining a codebook for uplink 8 antenna ports. Since the apparatus for determining a codebook for uplink 8 antenna ports provided in the embodiments of the present disclosure corresponds to the method provided in the above-mentioned embodiments, the implementations of the method for determining a codebook for uplink 8 antenna ports is also applicable to the apparatus for determining a codebook for uplink 8 antenna ports provided in the embodiments, and will not be described in detail in the embodiments.

FIG. 9 is a block diagram of an apparatus for determining a codebook for uplink 8 antenna ports provided by an embodiment of the present disclosure.

As illustrated in FIG. 9, the apparatus 900 includes a processing unit 910.

The processing unit 910 is configured to determine a candidate codeword set, in which the candidate codeword set includes at least one 2-antenna port codeword and/or at least one 4-antenna port codeword.

The processing unit 910 is further configured to determine a first codeword matching the number of transmission layers of an uplink channel according to at least one candidate codeword in the candidate codeword set, in which the first codeword is a codeword for partially-coherent transmission.

Optionally, the processing unit 910 is further configured to:

determine a grouping rule of antenna ports for coherent transmission among the 8 antenna ports, in which the number of groups of the antenna ports for coherent transmission is 4; and

adjust the first codeword based on the grouping rule, to enable a partially-coherent transmission characteristic of the first codeword to conform to the grouping rule of the antenna ports.

Optionally, the number of transmission layers of the uplink channel is 1, and the processing unit 910 is configured to:

concatenate a first candidate codeword in the candidate codeword set and a first zero element matrix in a row dimension to generate the first codeword;
in which the first candidate codeword is a 1-layer partially-coherent transmission codeword of 4 antenna ports.

Optionally, the number of transmission layers of the uplink channel is 1, and the processing unit 910 is configured to:

determine a co-phasing coefficient;
perform a point multiplication operation on the co-phasing coefficient and a first candidate codeword in the candidate codeword set to obtain a processed first candidate codeword; and
concatenate the first candidate codeword and the processed first candidate codeword in a row dimension to generate the first codeword;
in which the first candidate codeword is a 1-layer non-coherent transmission codeword of 4 antenna ports.

Optionally, the number of transmission layers of the uplink channel is 1, and the processing unit 910 is configured to:

concatenate a first candidate codeword in the candidate codeword set and multiple second zero element matrixes in a row dimension to generate the first codeword;
in which the first candidate codeword is a 1-layer fully-coherent transmission codeword of 2 antenna ports.

Optionally, the number of transmission layers of the uplink channel is one of 2, 3, or 4, and the processing unit 910 is configured to:

concatenate a first candidate codeword in the candidate codeword set and a first zero element matrix in a row dimension to generate a first concatenated codeword;
concatenate a second candidate codeword in the candidate codeword set and a second zero element matrix in a row dimension to generate a second concatenated codeword; and
concatenate the first concatenated codeword and the second concatenated codeword in a column dimension to generate the first codeword;
in which each of the first candidate codeword and the second candidate codeword is a partially-coherent transmission codeword of 4 antenna ports, and a sum of numbers of layers of the first candidate codeword and the second candidate codeword is equal to the number of layers of the first codeword.

Optionally, the number of transmission layers of the uplink channel is one of 2, 3, or 4, and the processing unit 910 is configured to:

determine a co-phasing coefficient;
perform a point multiplication operation on the co-phasing coefficient and a first candidate codeword in the candidate codeword set to obtain a processed first candidate codeword; and
concatenate the first candidate codeword and the processed first candidate codeword in a row dimension to generate the first codeword;

in which the first candidate codeword is a non-coherent transmission codeword of 4 antenna ports, and the number of layers of the first candidate codeword is equal to the number of layers of the first codeword.

Optionally, the number of transmission layers of the uplink channel is one of 2, 3, or 4, and the processing unit 910 is configured to:

concatenate a first candidate codeword in the candidate codeword set and multiple zero element matrixes in a row dimension to generate a first concatenated codeword; and
concatenate multiple first concatenated codewords in a column dimension to generate the first codeword, wherein the number of the multiple first concatenated codewords is equal to the number of transmission layers;
in which the first candidate codeword is a 1-layer fully-coherent transmission codeword of 2 antenna ports.

Optionally, the number of transmission layers of the uplink channel is greater than 4 but no more than 8, and the processing unit 910 is configured to:

concatenate a first candidate codeword in the candidate codeword set and multiple second zero element matrixes in a row dimension to generate a first concatenated codeword;
concatenate a second candidate codeword in the candidate codeword set and the plurality of second zero element matrixes in a row dimension to generate a second concatenated codeword;
concatenate a third candidate codeword in the candidate codeword set and the plurality of second zero element matrixes in a row dimension to generate a third concatenated codeword;
concatenate a fourth candidate codeword in the candidate codeword set and the plurality of second zero element matrixes in a row dimension to generate a fourth concatenated codeword; and
concatenate the first concatenated codeword, the second concatenated codeword, the third concatenated codeword, the fourth concatenated codeword in a column dimension to generate the first codeword;
in which each of the first candidate codeword, the second candidate codeword, the third candidate codeword and the fourth candidate codeword is a fully-coherent transmission codeword of 2 antenna ports, and a sum of numbers of layers of the first candidate codeword, the second candidate codeword, the third candidate codeword and the fourth candidate codeword is equal to the number of layers of the first codeword.

Optionally, the number of transmission layers of the uplink channel is greater than 4 but no more than 8, and the processing unit 910 is configured to:

determine a co-phasing coefficient;
perform a point multiplication operation on the co-phasing coefficient and a first candidate codeword in the candidate codeword set to obtain a processed first candidate codeword;
perform a point multiplication operation on a complex number of the co-phasing coefficient and a second candidate codeword in the candidate codeword set to obtain a processed second candidate codeword;
concatenate the first candidate codeword and the processed first candidate codeword in a row dimension to generate a first concatenated codeword;
concatenate the second candidate codeword and the processed second candidate codeword in a row dimension to generate a second concatenated codeword; and
concatenate the first concatenated codeword and the second concatenated codeword in a column dimension to generate the first codeword;
in which each of the first candidate codeword and the second candidate codeword is a non-coherent transmission codeword of 4 antenna ports, and a sum of numbers of layers of the first candidate codeword and the second candidate codeword is equal to the number of layers of the first codeword.

Optionally, the number of transmission layers of the uplink channel is greater than 4 but no more than 8, and the processing unit 910 is configured to:

determine a co-phasing coefficient;
perform a point multiplication operation on the co-phasing coefficient and a first candidate codeword in the candidate codeword set to obtain a processed first candidate codeword;
perform a point multiplication operation on a complex number of the co-phasing coefficient and a second candidate codeword in the candidate codeword set to obtain a processed second candidate codeword;
concatenate a third candidate codeword in the candidate codeword set and the processed first candidate codeword in a row dimension to generate a first concatenated codeword;

concatenate a fourth candidate codeword in the candidate codeword set and the processed second candidate codeword in a row dimension to generate a second concatenated codeword; and

concatenate the first concatenated codeword and the second concatenated codeword in a column dimension to generate the first codeword;

in which each of the first candidate codeword, the second candidate codeword, the third candidate codeword and the fourth candidate codeword is a non-coherent transmission codeword of 4 antenna ports, the number of layers of the first candidate codeword is the same as the number of layers of the third candidate codeword, the number of layers of the second candidate codeword is the same as the number of layers of the fourth candidate codeword, and a sum of numbers of layers of the first candidate codeword and the second candidate codeword is equal to the number of layers of the first codeword.

Optionally, the processing unit 910 is configured to:

perform energy normalization processing on the first codeword.

With the apparatus for determining a codebook for uplink 8 antenna ports, by determining the candidate codeword set including at least one 2-antenna port codeword and/or at least one 4-antenna port codeword, and determining the first codeword matching the number of transmission layers of the uplink channel according to at least one candidate codeword in the candidate codeword set, in which the first codeword is a codeword for partially-coherent transmission, a high-dimensional partially-coherent transmission codeword of uplink 8 antenna ports may be constructed based on a low-dimensional codeword, so that the uplink channel communication supports partially-coherent transmission of 4-port groups of 8 antenna ports, thereby further enhancing the uplink channel communication technology, effectively improving the uplink channel transmission rate, and thus improving the communication efficiency.

Please refer to FIG. 10, which is a block diagram of an apparatus for determining a codebook for uplink 8 antenna ports according to the embodiments of the present disclosure. The apparatus 1000 may be a network device, a terminal, a chip, a chip system, a processor, etc. that supports the network device to implement the method, or a chip, a chip system, a processor, etc. that supports the terminal to implement the method. The apparatus may be used to implement the method in the above method embodiments. For details, please refer to the above method embodiments.

The communication apparatus 1000 may include one or more processors 1001. The processor 1001 may be a general purpose processor or a special purpose processor, for example, a baseband processor or a central processing unit. The baseband processor may be used to process communication protocols and communication data, and the central processing unit may be used to control communication apparatuses (such as a base station, a baseband chip, a terminal, a terminal chip, a DU or a CU, etc.), execute computer programs, and process computer program data.

Optionally, the communication apparatus 1000 may also include one or more memories 1002 for storing the computer program 1003. When the processor 1001 executes the computer program 1003, the communication apparatus 1000 is caused to implement the method in the above method embodiments. The computer program 1003 may be solidified in the processor 1001, in which case the processor 1001 may be implemented by hardware.

Optionally, the memory 1002 may also store data. The apparatus 1000 and the memory 1002 may be set up separately or integrated together.

Optionally, the communication apparatus 1000 may also include a transceiver 1005 and an antenna 1006. The transceiver 1005 may be called a transceiver unit, a transceiver machine, or a transceiver circuit, etc., to perform the receiving and sending function. The transceiver 1005 may include a receiver and a transmitter, and the receiver may be called a receiving machine or a receiving circuit, etc. to realize the receiving function; and the transmitter may be called a transmitting machine or a transmitting circuit, etc. to realize the sending function.

Optionally, the communication apparatus 1000 may also include one or more interface circuits 1007. The interface circuit 1005 is used to receive code instructions and transmit the code instructions to the processor 1001. The processor 1001 runs the code instructions to cause the communication apparatus 1000 to implement the method in the above method embodiments.

In one implementation, the processor 1001 may include a transceiver for performing the receiving and sending function. For example, the transceiver may be a transceiver circuit, or an interface, or an interface circuit. The transceiver circuit, the interface, or the interface circuit used to perform the receiving and sending function may be separate or integrated. The transceiver circuit, the interface or the interface circuit may be used for reading and writing code/data, or the transceiver circuit, the interface or the interface circuit may be used for the transmission of signals.

In an implementation, the communication apparatus 1000 includes a circuit that may perform the transmitting or receiving or communicating function in the above method embodiments. The processor and transceiver in the disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication apparatus/device in the above embodiments may be a network device or a terminal, but the scope of the communication apparatus in the disclosure is not limited to this, and the structure of the communication apparatus may not be restricted by FIG. 9. The communication apparatus may be an independent device or part of a larger device. For example, the communication apparatus may be:

(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

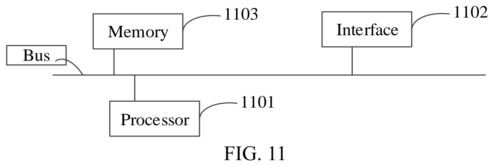

For the case where the communication apparatus may be a chip or a chip system, please refer to the block diagram of a chip in FIG. 11. The chip shown in FIG. 11 includes a processor 1101 and an interface 1102. There may be one or more processors 1101, and there may be one or more interfaces 1102.

The interface 1102 is configured to receive code instructions and send the code instructions to the processor.

The processor 1101 is configured to run the code instructions to perform the method as described in FIG. 2, FIG. 4 to FIG. 6.

Optionally, the chip also includes a memory 1103, which is used to store necessary computer programs and data.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

In the embodiments of the present disclosure, a communication system is also provided. The communication system includes the apparatus in the embodiment with reference to FIG. 9 or the system includes the communication apparatus described in the embodiment with reference to FIG. 10.

In the present disclosure, a readable storage medium for storing instructions is provided. When the instructions are executed by a computer, the function of any one of the above method embodiments is performed.

In the present disclosure, a computer program product is provided. When the computer program product is executed by a computer, the function of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that numbers like "first" and "second" in the present disclosure are only for the convenience of description, and are not used to limit the scope of the embodiments of the present disclosure, and also indicate a sequential order.

The term "at least one" in the present disclosure may also be described as one or more, and the more may be two, three, four, or more, which is not limited in the present disclosure. In the embodiments of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Correspondence relationships indicated by tables in the present disclosure may be configured or predefined.

Values of information in the tables are only examples, and may be configured as other values, which are not limited in the disclosure. When the correspondence relationship between information and parameters is configured, it is not always necessary to configure all correspondence relationships indicated in tables. For example, in the tables of the present disclosure, correspondence relationships indicated by some rows may not be configured. For another example, appropriate transformations and adjustments, such as splitting and merging, may be made based on the above tables. Names of parameters shown in headers of the tables may be other names understandable by the communication apparatus, and values or representations of the parameters may be other values or representations understandable by the communication apparatus. When the above tables are implemented, other data structures may be used, for example, arrays, queues, containers, stacks, linear lists, pointers, linked lists, trees, graphs, structures, classes, heaps or hash tables may be used.

Predefined in the disclosure may be understood as defined, predefined, stored, prestored, pre-negotiated, pre-configured, solidified or pre-fired.

Those skilled in the related art may realize that, in combination with the examples described in embodiments of the present disclosure, units and algorithm steps may be implemented by electronic hardware or a combination of electronic hardware and computer software. Whether the functions are executed by hardware or software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that a specific working process of a system, an apparatus and a unit described above may refer to a corresponding process in the above method embodiments, which will not be repeated here.

It should be understood that the various forms of processes shown above can be used to reorder, add or delete steps. For example, the steps recorded in the embodiments of the present disclosure can be executed in parallel, sequentially or in different orders, as long as the desired results of the technical solution disclosed in the present disclosure can be achieved, and this document is not limited thereto.

The above specific implementations do not constitute a limitation on the protection scope of the present disclosure. It should be understood by those skilled in the art that various modifications, combinations, sub-combinations and substitutions can be made according to design requirements and other factors. Any modification, equivalent substitution and improvement made within the spirit and principle of the present disclosure should be included in the protection scope of the present disclosure.

## Claims

1. A method for determining a codebook for uplink 8 antenna ports, comprising:

   determining a candidate codeword set, wherein the candidate codeword set comprises at least one 2-antenna port codeword and/or at least one 4-antenna port codeword; and
   determining a first codeword matching the number of transmission layers of an uplink channel according to at least one candidate codeword in the candidate codeword set, wherein the first codeword is a codeword for partially-coherent transmission.

2. The method of claim 1, further comprising:

   determining a grouping rule of antenna ports for coherent transmission among the 8 antenna ports, wherein the number of groups of the antenna ports for coherent transmission is 4; and
   adjusting the first codeword based on the grouping rule, to enable a partially-coherent transmission characteristic of the first codeword to conform to the grouping rule of the antenna ports.

3. The method of claim 1 or 2, wherein the number of transmission layers of the uplink channel is 1, and determining the first codeword matching the number of transmission layers of the uplink channel comprises:

   concatenating a first candidate codeword in the candidate codeword set and a first zero element matrix in a row dimension to generate the first codeword;
   wherein the first candidate codeword is a 1-layer partially-coherent transmission codeword of 4 antenna ports.

4. The method of claim 1 or 2, wherein the number of transmission layers of the uplink channel is 1, and determining the first codeword matching the number of transmission layers of the uplink channel comprises:

determining a co-phasing coefficient;

performing a point multiplication operation on the co-phasing coefficient and a first candidate codeword in the candidate codeword set to obtain a processed first candidate codeword; and

concatenating the first candidate codeword and the processed first candidate codeword in a row dimension to generate the first codeword;

wherein the first candidate codeword is a 1-layer non-coherent transmission codeword of 4 antenna ports.

5. The method of claim 1 or 2, wherein the number of transmission layers of the uplink channel is 1, and determining the first codeword matching the number of transmission layers of the uplink channel comprises:

concatenating a first candidate codeword in the candidate codeword set and multiple second zero element matrixes in a row dimension to generate the first codeword;

wherein the first candidate codeword is a 1-layer fully-coherent transmission codeword of 2 antenna ports.

6. The method of claim 1 or 2, wherein the number of transmission layers of the uplink channel is one of 2, 3, or 4, and determining the first codeword matching the number of transmission layers of the uplink channel comprises:

concatenating a first candidate codeword in the candidate codeword set and a first zero element matrix in a row dimension to generate a first concatenated codeword;

concatenating a second candidate codeword in the candidate codeword set and a second zero element matrix in a row dimension to generate a second concatenated codeword; and

concatenating the first concatenated codeword and the second concatenated codeword in a column dimension to generate the first codeword;

wherein each of the first candidate codeword and the second candidate codeword is a partially-coherent transmission codeword of 4 antenna ports, and a sum of the number of layers of the first candidate codeword and the number of layers of the second candidate codeword is equal to the number of layers of the first codeword.

7. The method of claim 1 or 2, wherein the number of transmission layers of the uplink channel is one of 2, 3, or 4, and determining the first codeword matching the number of transmission layers of the uplink channel comprises:

determining a co-phasing coefficient;

performing a point multiplication operation on the co-phasing coefficient and a first candidate codeword in the candidate codeword set to obtain a processed first candidate codeword; and

concatenating the first candidate codeword and the processed first candidate codeword in a row dimension to generate the first codeword;

wherein the first candidate codeword is a non-coherent transmission codeword of 4 antenna ports, and the number of layers of the first candidate codeword is equal to the number of layers of the first codeword.

8. The method of claim 1 or 2, wherein the number of transmission layers of the uplink channel is one of 2, 3, or 4, and determining the first codeword matching the number of transmission layers of the uplink channel comprises:

concatenating a first candidate codeword in the candidate codeword set and multiple zero element matrixes in a row dimension to generate a first concatenated codeword; and

concatenating multiple first concatenated codewords in a column dimension to generate the first codeword, wherein the number of the multiple first concatenated codewords is equal to the number of transmission layers;

wherein the first candidate codeword is a 1-layer fully-coherent transmission codeword of 2 antenna ports.

9. The method of claim 1 or 2, wherein the number of transmission layers of the uplink channel is greater than 4 but no more than 8, and determining the first codeword matching the number of transmission layers of the uplink channel comprises:

concatenating a first candidate codeword in the candidate codeword set and multiple second zero element matrixes in a row dimension to generate a first concatenated codeword;

concatenating a second candidate codeword in the candidate codeword set and the plurality of second zero element matrixes in a row dimension to generate a second concatenated codeword;

concatenating a third candidate codeword in the candidate codeword set and the plurality of second zero element matrixes in a row dimension to generate a third concatenated codeword;

concatenating a fourth candidate codeword in the candidate codeword set and the plurality of second zero element matrixes in a row dimension to generate a fourth concatenated codeword; and

concatenating the first concatenated codeword, the second concatenated codeword, the third concatenated codeword, the fourth concatenated codeword in a column dimension to generate the first codeword;

wherein each of the first candidate codeword, the second candidate codeword, the third candidate codeword and the fourth candidate codeword is a fully-coherent transmission codeword of 2 antenna ports, and a sum of the number of layers of the first candidate codeword, the number of layers of the second candidate codeword, the number of layers of the third candidate codeword and the number of layers of the fourth candidate codeword is equal to the number of layers of the first codeword.

10. The method of claim 1 or 2, wherein the number of transmission layers of the uplink channel is greater than 4 but no more than 8, and determining the first codeword matching the number of transmission layers of the uplink channel comprises:

determining a co-phasing coefficient;

performing a point multiplication operation on the co-phasing coefficient and a first candidate codeword in the candidate codeword set to obtain a processed first candidate codeword;

performing a point multiplication operation on a complex number of the co-phasing coefficient and a second candidate codeword in the candidate codeword set to obtain a processed second candidate codeword;

concatenating the first candidate codeword and the processed first candidate codeword in a row dimension to generate a first concatenated codeword;

concatenating the second candidate codeword and the processed second candidate codeword in a row dimension to generate a second concatenated codeword; and

concatenating the first concatenated codeword and the second concatenated codeword in a column dimension to generate the first codeword;

wherein each of the first candidate codeword and the second candidate codeword is a non-coherent transmission codeword of 4 antenna ports, and a sum of the number of layers of the first candidate codeword and the number of layers of the second candidate codeword is equal to the number of layers of the first codeword.

11. The method of claim 1 or 2, wherein the number of transmission layers of the uplink channel is greater than 4 but no more than 8, and determining the first codeword matching the number of transmission layers of the uplink channel comprises:

determining a co-phasing coefficient;

performing a point multiplication operation on the co-phasing coefficient and a first candidate codeword in the candidate codeword set to obtain a processed first candidate codeword;

performing a point multiplication operation on a complex number of the co-phasing coefficient and a second candidate codeword in the candidate codeword set to obtain a processed second candidate codeword;

concatenating a third candidate codeword in the candidate codeword set and the processed first candidate codeword in a row dimension to generate a first concatenated codeword;

concatenating a fourth candidate codeword in the candidate codeword set and the processed second candidate codeword in a row dimension to generate a second concatenated codeword; and

concatenating the first concatenated codeword and the second concatenated codeword in a column dimension to generate the first codeword;

wherein each of the first candidate codeword, the second candidate codeword, the third candidate codeword and the fourth candidate codeword is a non-coherent transmission codeword of 4 antenna ports, the number of layers of the first candidate codeword is the same as the number of layers of the third candidate codeword, the number of layers of the second candidate codeword is the same as the number of layers of the fourth candidate codeword, and a sum of the number of layers of the first candidate codeword and the number of layers of the second candidate codeword is equal to the number of layers of the first codeword.

12. The method of any of claims 1-11, further comprising:
performing energy normalization processing on the first codeword.

13. An apparatus for determining a codebook for uplink 8 antenna ports, comprising:
a processing unit, configured to determine a candidate codeword set, wherein the candidate codeword set comprises at least one 2-antenna port codeword and/or at least one 4-antenna port codeword; and determine a first codeword matching the number of transmission layers of an uplink channel according to at least one candidate codeword in the candidate codeword set, wherein the first codeword is a codeword for partially-coherent transmission.

14. A communication apparatus, comprising:

   a processor; and
   a memory for storing computer programs;
   wherein the processor is configured to execute the computer programs stored in the memory, to cause the communication apparatus to perform the method of any one of claims 1 to 12.

15. A communication apparatus, comprising:

   a processor; and
   an interface circuit for receiving code instructions and transmitting the code instructions to the processor;
   wherein the processor is configured to execute the code instructions to perform the method of any one of claims 1 to 12.

16. A computer-readable storage medium for storing instructions, wherein in case that the instructions are executed, the method of any one of claims 1 to 12 is implemented.

Communication system

| Network device 101 | Terminal 102 |

FIG. 1

Determining a candidate codeword set, in which the candidate codeword set includes at least one 2-antenna port codeword and/or at least one 4-antenna port codeword — 201

Determining a first codeword matching the number of transmission layers of an uplink channel according to at least one candidate codeword in the candidate codeword set, in which the first codeword is a codeword for partially-coherent transmission — 202

FIG. 2

(M,N,P)=(1,4,2)

0    4  1    5  2    6  3    7

FIG. 3a

(M,N,P)=(2,2,2)

1    5  3    7

0    4  2    6

FIG. 3b

Determining a candidate codeword set, in which the candidate codeword set includes at least one 2-antenna port codeword and/or at least one 4-antenna port codeword ⎯ 401

Determining a first codeword matching the number of transmission layers of an uplink channel according to at least one candidate codeword in the candidate codeword set, in which the first codeword is a codeword for partially-coherent transmission, and the number of transmission layers of the uplink channel is 1 ⎯ 402

Determining a grouping rule of antenna ports for coherent transmission among the 8 antenna ports, in which the number of groups of the antenna ports for coherent transmission is 4 ⎯ 403

Adjusting the first codeword based on the grouping rule to enable a partially-coherent transmission characteristic of the first codeword to conform to the grouping rule of the antenna ports ⎯ 404

FIG. 4

Determining a candidate codeword set, in which the candidate codeword set includes at least one 2-antenna port codeword and/or at least one 4-antenna port codeword ⎯ 501

Determining a first codeword matching the number of transmission layers of an uplink channel according to at least one candidate codeword in the candidate codeword set, in which the first codeword is a codeword for partially-coherent transmission, and the number of transmission layers of the uplink channel is one of 2, 3 or 4 ⎯ 502

Determining a grouping rule of antenna ports for coherent transmission among the 8 antenna ports, in which the number of groups of the antenna ports for coherent transmission is 4 ⎯ 503

Adjusting the first codeword based on the grouping rule to enable a partially-coherent transmission characteristic of the first codeword to conform to the grouping rule of the antenna ports ⎯ 504

FIG. 5

Determining a candidate codeword set, in which the candidate codeword set includes at least one 2-antenna port codeword and/or at least one 4-antenna port codeword ⎯ 601

Determining a first codeword matching the number of transmission layers of an uplink channel according to at least one candidate codeword in the candidate codeword set, in which the first codeword is a codeword for partially-coherent transmission, and the number of transmission layers of the uplink channel is greater than 4 but no more than 8 ⎯ 602

Determining a grouping rule of antenna ports for coherent transmission among the 8 antenna ports, in which the number of groups of the antenna ports for coherent transmission is 4 ⎯ 603

Adjusting the first codeword based on the grouping rule to enable a partially-coherent transmission characteristic of the first codeword to conform to the grouping rule of the antenna ports ⎯ 604

FIG. 6

Determining a codebook for the uplink 8 antenna ports — 701

Receiving indication information sent by a network device, in which the indication information is used to indicate a first codeword from the uplink codebook for the 8 antenna ports — 702

Using the first codeword to perform precoding processing on the uplink channel — 703

Sending the precoded uplink channel to the network device — 704

FIG. 7

Sending indication information to a terminal, in which the indication information is used to indicate a first codeword from an uplink codebook for 8 antenna ports — 801

Receiving a precoded uplink channel subjected to precoding processing with the first codeword sent by the terminal — 802

FIG. 8

900

Apparatus for determining a codebook for uplink 8 antenna ports

910

Processing unit

FIG. 9

Apparatus 1000 for determining a codebook for uplink 8 antenna ports

1001

1002 — Memory

1003 — Computer program

Processor

1005 — Transceiver

Antenna

1006

Interface circuit

1007

FIG. 10

Memory —1103        Interface —1102

Bus

Processor —1101

FIG. 11

## INTERNATIONAL SEARCH REPORT

| International application No. |
| --- |
| **PCT/CN2023/070141** |

**A.  CLASSIFICATION OF SUBJECT MATTER**

  H04L 27/00(2006.01)i

According to International Patent Classification (IPC) or to both national classification and IPC

**B.  FIELDS SEARCHED**

Minimum documentation searched (classification system followed by classification symbols)

  IPC:  H04L

Documentation searched other than minimum documentation to the extent that such documents are included in the fields searched

Electronic data base consulted during the international search (name of data base and, where practicable, search terms used)

  3GPP, CNTXT, DWPI, ENTXTC, WPABSC: 码本, 码字, 天线, 端口, 上行, 层数, 部分相干, 相干, 分组, codeword, antenna, port, uplink, layer, partial coherent, group

**C.  DOCUMENTS CONSIDERED TO BE RELEVANT**

| Category* | Citation of document, with indication, where appropriate, of the relevant passages | Relevant to claim No. |
| --- | --- | --- |
| X | OPPO. "SRI TPMI enhancement for 8 TX UL transmission R1-2208798" *3GPP TSG RAN WG1 #110bis*, 19 October 2022 (2022-10-19), parts 1-2 | 1-16 |
| X | CATT. "Discussion on codebook and SRI/TPMI enhancement for UL 8 TX R1-2211173" *3GPP TSG RAN WG1 Meeting #110bis-e*, 18 November 2022 (2022-11-18), parts 1-3 | 1-16 |
| X | CATT. "Codebook and SRI/TPMI enhancement for UL 8 TX R1-2208951" *3GPP TSG RAN WG1 Meeting #110bis-e*, 19 October 2022 (2022-10-19), parts 1-3 | 1-16 |
| A | US 2014112407 A1 (TELEFONAKTIEBOLAGET L M ERICSSON (PUBL)) 24 April 2014 (2014-04-24) entire document | 1-16 |
| A | US 2021399773 A1 (DATANG MOBILE COMMUNICATIONS EQUIPMENT CO., LTD.) 23 December 2021 (2021-12-23) entire document | 1-16 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 August 2023** | **17 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/070141**

| Patent document cited in search report | | | Publication date (day/month/year) | Patent family member(s) | | | Publication date (day/month/year) |
|---|---|---|---|---|---|---|---|
| US | 2014112407 | A1 | 24 April 2014 | EP | 2732563 | A1 | 21 May 2014 |
| | | | | WO | 2013009228 | A1 | 17 January 2013 |
| | | | | US | 2012024542 | A1 | 02 February 2012 |
| US | 2021399773 | A1 | 23 December 2021 | EP | 3859989 | A1 | 04 August 2021 |
| | | | | TW | 202013904 | A | 01 April 2020 |
| | | | | KR | 20210068107 | A | 08 June 2021 |
| | | | | WO | 2020063365 | A1 | 02 April 2020 |
| | | | | CN | 110971275 | A | 07 April 2020 |
| | | | | IN | 202127017317 | A | 10 September 2021 |

Form PCT/ISA/210 (patent family annex) (July 2022)